# EUROPEAN PATENT SPECIFICATION

(11) **EP 3 451 680 B1**
(45) Date of publication and mention of the grant of the patent: **02.09.2020**
(21) Application number: 17789305.4
(22) Date of filing: 14.04.2017
(51) Int. Cl.: H04N 21/443, H04N 21/4363, H04N 21/436

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 28.04.2016 JP 2016092027
(43) Date of publication of application: 06.03.2019
(73) Proprietor: Sony Corporation, Tokyo 108-0075 (JP)
(72) Inventor: HIGUCHI Satoshi, Tokyo 141-8610 (JP)
(74) Representative: 2SPL Patentanwälte PartG mbB
(86) International application number: PCT/JP2017/015214
(87) International publication number: WO 2017/188019

(56) References cited:
- EP-A2- 2 190 193
- WO-A1-2013/088480
- JP-A- 2010 045 450
- JP-A- 2011 019 098
- JP-A- 2013 102 265
- US-A1- 2006 280 055
- US-A1- 2009 167 552
- US-A1- 2010 070 783
- 'High-Definition Multimedia Interface Specification' HDMI LICENSING 10 November 2006,

## Description

### TECHNICAL FIELD

The present disclosure relates to an information processing apparatus and an information processing method, and more particularly, to an information processing apparatus and an information processing method which are capable of reducing consumption of standby power of a high-definition multimedia interface (HDMI (registered trademark))-consumer electronics control (CEC) support device.

### BACKGROUND ART

Recently, a lot of AMP devices (amplifiers) (hereinafter also simply referred to as amplifying devices) represented by a sound bar and an audio visual (AV) receiver for improving a sound quality of a flat-screen television (TV) (television receiver) are available on the market.

The AMP devices are often connected to a television by means of HDMI-CEC and designed to be simply controllable by a television remote controller.

In recent years, a function such as a universal serial bus (USB) player or a network player is installed in an HDMI-CEC device, particularly, an AMP device represented by an AV receiver or a sound bar.

Conventionally, such an AMP device is configured by controlling an HDMI device, a digital signal processor (DSP), and an amplifier integrated circuit (IC) through a one chip microcomputer, but a system on a chip (SOC) device in which a DSP or an HDMI device is integrated is increasingly used to implement a plurality of functions described above. By using the SOC device, the number of parts is reduced, and a circuit is simplified.

However, if the HDMI-CEC function is installed in these devices, since HDMI-CEC includes a function of causing the device to transition from a power OFF state to the power ON state, communication performed in the power OFF state is essential.

In this case, if an SOC to be used does not have a configuration capable of performing power control on an HDMI-CEC control unit and other control units independently, when HDMI-CEC is operated, power thereof is unable to be interrupted.

In other words, although it looks the power OFF state, but it actually becomes a power ON state, and standby power is unable to be lowered in a state in which the device is not used. On the other hand, in recent years, it is a well-known fact that there is a movement to reduce the standby power of electronic devices in order to protect the global environment.

In this regard, since HDMI-CEC is a function of performing power source interlocking of devices, a technique for reducing power consumption even when a device is in the standby state has been proposed (see Patent Document 1 or Patent Document 2).

### CITATION LIST

### PATENT DOCUMENT

Patent Document 1: Japanese Patent Application Laid-Open No. 2010-130068
Patent Document 2: European Patent Application EP 2 190 193 A2

### SUMMARY OF THE INVENTION

### PROBLEMS TO BE SOLVED BY THE INVENTION

By the way, in a case where the HDMI-CEC function is implemented with the SOC, power consumption may not be able to be lowered in a state in which CEC can be operated.

In other words, in a case where a one-chip microcomputer is installed in addition to the SOC, and CEC is implemented therein, since it is possible to disconnect the power source of the SOC in the standby state and implement the CEC function on a one-chip microcomputer side in which power consumption is relatively small, there is no restriction that the standby power is increased as described above.

However, in Europe, there is legal regulations such as an energy using products (EUP) directive, there is a restriction to the standby power of AV devices, and the standby power of AV products are required to be lowered year by year.

However, in a case where HDMI-CEC is implemented, since it is regarded as a special standby state for cooperating with other devices such as a network standby unlike a normal standby state, the above-described restrictions can be avoided.

In other words, in a state in which interlocking with other devices is necessary such as the network standby, the standby power can be overlooked.

However, the network standby indicates a state in which there is an HDMI connection and interlocking with other devices can be performed, but for example, a system in which a television (television receiver) and an AMP device are connected by means of HDMI-CEC is preferable, but in a case where a HDMI-CEC connection is lost and it becomes a state in which the HDMI-CEC connection is not established, it is likely to be determined as being not the network standby.

For example, when an HDMI-CEC support AMP device is in the standby state, a case in which the HDMI cable is pulled out or the like corresponds to this state.

In order to avoid such a state, a method of installing a one-chip microcomputer separately from an SOC and causing a microcomputer side to control an HDMI-CEC operation in the power OFF state is considered, but this increases a hardware cost, and a software process is also performing communication with the SOC and thus complicated.

The present disclosure has been made in light of the foregoing, and it is desirable to implement power saving without increasing a cost although HDMI-CEC is implemented in an SOC by further transitioning to a power saving standby state when it is not connected with other devices by means of HDMI-CEC in a case where an HDMI-CEC device is in a power OFF state.

### SOLUTIONS TO PROBLEMS

An information processing apparatus according to one aspect of the present disclosure is connected with another apparatus via an interface including a signal channel in which transmission and reception of a predetermined signal are performed and a control channel in which a control signal used for control is transmitted bi-directionally, wherein the interface is a HDMI, and the information processing apparatus includes: a main control unit configured to control an overall operation in the information processing apparatus; a signal management unit configured to transmit a first control signal to the other apparatus, determine a connection state of the interface on the basis of a second control signal received from the other apparatus in response to the first control signal, and control an operation of the main control unit in accordance with a determination result for the connection state, wherein the control signal, the first control signal, and the second control signal are CEC messages; and a transmission/reception control unit for controlling transmission and reception of the predetermined signal, wherein, when power supply to the transmission/reception control unit is stopped, the signal management unit transmits the first control signal to the other apparatuses at a first time interval, and determines an insertion/extraction state of an HDMI cable as the connection state of the interface on the basis of the second control signal received from the other apparatus in response to the first control signal.

The control of the overall operation in the information processing apparatus by the main control unit can include control of a power supply state to the main control unit and an operation clock.

It is possible to cause the signal management unit to transmit a polling signal to the other apparatus as the first control signal at the first time interval and determine the insertion/extraction state of the HDMI cable in accordance with the presence or absence of a response signal which is the second control signal transmitted in response to the polling signal.

When a polling signal which is a third control signal transmitted from the other apparatus at a second time interval shorter than the first time interval is received, it is possible to cause the signal management unit to transmit a response signal which is a corresponding fourth control signal to the other apparatus and reset a time interval at which the polling signal which is the first control signal is transmitted.

In a case where the second control signal transmitted from the other apparatus in response to the first control signal is not received, it is possible to cause the signal management unit to determine that the HDMI cable which is in the connection state of the interface is removed, stop an operation of the transmission/reception control unit and stop the operation of the main control unit.

A manipulation input unit configured to receive a manipulation input from a user and generate a manipulation signal corresponding to manipulation content can be further included, and in a case where the operation of the transmission/reception control unit is stopped, and the operation of the main control unit is stopped, when the manipulation signal is generated by the manipulation input unit, it is possible to cause the signal management unit to resume the operation of the transmission/reception control unit and resume the operation of the main control unit.

In a case where the operation of the transmission/reception control unit is stopped, and the operation of the main control unit is stopped, when a predetermined control signal is received from the other apparatus, it is possible to cause the signal management unit to resume the operation of the transmission/reception control unit and resume the operation of the main control unit.

It is possible to cause the signal management unit to transmit the first control signal including a logical address of the information processing apparatus which is a transmission source and a logical address of the other apparatus which is a transmission destination.

An information processing method according to one aspect of the present disclosure is an information processing method of an information processing apparatus that is connected with another apparatus via an interface including a signal channel in which transmission and reception of a predetermined signal are performed and a control channel in which a control signal used for control is transmitted bi-directionally, wherein the interface is a HDMI, the information processing method including: transmitting a first control signal to the other apparatus, determining a connection state of the interface on the basis of a second control signal received from the other apparatus in response to the first control signal, wherein the control signal, the first control signal, and the second control signal are CEC messages; and controlling an operation of a main control unit in accordance with a determination result for the connection state, the main control unit being configured to control an overall operation in the information processing apparatus, wherein, when power supply to a transmission/reception control unit for controlling transmission and reception of the predetermined signal is stopped, the first control signal is transmitted to the other apparatuses at a first time interval and an insertion/extraction state of an HDMI cable as the connection state of the interface is determined on the basis of the second control signal received from the other apparatus in response to the first control signal.

In one aspect of the present disclosure, an operation of a main control unit configured to control an overall operation in an information processing apparatus that is connected with another apparatus via an interface including a signal channel in which transmission and reception of a predetermined signal are performed and a control channel in which a control signal used for control is transmitted bi-directionally is controlled in accordance with a determination result for a connection state of the interface based on a second control signal received from the other apparatus in response to the first control signal transmitted to the other apparatus.

### EFFECTS OF THE INVENTION

According to one aspect of the present disclosure, it is possible to implement power saving corresponding to an insertion/extraction state of an HDMI cable.

### BRIEF DESCRIPTION OF DRAWINGS

Fig. 1 is a block diagram illustrating a configuration example of an AV system as a first embodiment to which the present disclosure is applied.
Fig. 2 is a diagram for describing a logical address.
Fig. 3 is a block diagram illustrating a configuration example of a television receiver.
Fig. 4 is a block diagram illustrating a configuration example of an AV amplifier in the first embodiment.
Fig. 5 is a block diagram illustrating configuration examples of an HDMI transmitting unit (an HDMI source) and an HDMI receiving unit (an HDMI sink).
Fig. 6 is a diagram illustrating a structure of TMDS transmission data.
Fig. 7 is a diagram illustrating a pin arrangement (type A) of an HDMI terminal.
Fig. 8 is a diagram illustrating a block configuration of data transmitted through a CEC line (a CEC channel).
Fig. 9 is a diagram illustrating a data structure example of a header block.
Fig. 10 is a diagram for describing state transition of an operation state of the AV amplifier of Fig. 4.
Fig. 11 is a diagram for describing each operation state.
Fig. 12 is a flowchart illustrating a power saving standby state transition process.
Fig. 13 is a diagram for describing a power saving standby state transition process.
Fig. 14 is a diagram for describing a power saving standby state transition process.
Fig. 15 is a diagram for describing superiority of an HDMI cable in a power saving standby state transition process .
Fig. 16 is a flowchart illustrating another power saving standby state transition process.
Fig. 17 is a diagram for describing another power saving standby state transition process.
Fig. 18 is a block diagram illustrating a configuration example of an AV amplifier in a second embodiment.
Fig. 19 is a diagram for describing state transition of an operation state of the AV amplifier of Fig. 18.
Fig. 20 is a flowchart illustrating a return process.
Fig. 21 is a diagram illustrating a return process.
Fig. 22 is a diagram illustrating a configuration example of a general-purpose personal computer.

### MODE FOR CARRYING OUT THE INVENTION

Hereinafter, preferred embodiments of the present disclosure will now be described in detail with reference to the appended drawings. Note that, in this specification and the drawings, the same reference numerals are assigned to constituent elements having substantially the same function configuration, and redundant description is omitted.

It is noted that examples denoted as embodiments in the description are not necessarily encompassed by the scope of protection, which is solely defined by the claims.

Further, the description will proceed in the following order.
1. First embodiment
2. Modified example of first embodiment
3. Second embodiment
4. Application example

### <<1. First embodiment>>

### <Configuration example of AV system>

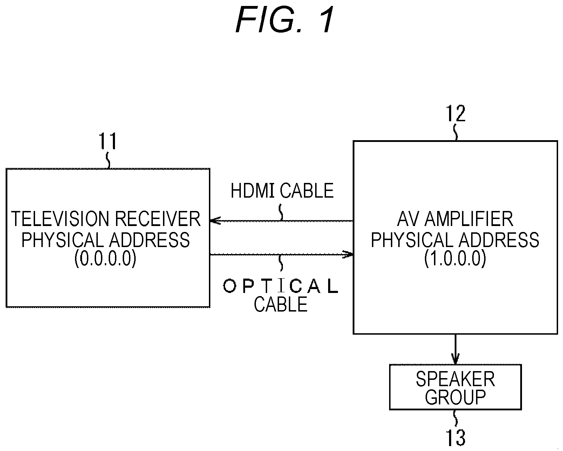

Fig. 1 illustrates a configuration example of an AV system as one embodiment to which the present technology is applied.

The AV system of Fig. 1 includes a television receiver 11 and an AV amplifier 12.

Each of the television receiver 11 and the AV amplifier 12 is an HDMI-CEC support device (hereinafter referred to simply as a CEC support device). In the AV system of Fig. 1, the television receiver 11 is connected with the AV amplifier 12 by an HDMI cable, and the AV amplifier 12 is connected with each of a BD recorder, a DVD player, a satellite tuner, or the like (not illustrated) by an HDMI cable. Further, in the AV system of Fig. 1, the television receiver 11 corresponds to an HDMI sink, the AV amplifier 12 corresponds to an HDMI repeater, and the BD recorder, the DVD player, the satellite tuner, and the like (not illustrated) correspond to HDMI sources.

Further, the television receiver 11 and the AV amplifier 12 are also connected by an OPTICAL cable. The television receiver 11 supplies the optical digital audio signal to the AV amplifier 12 via the OPTICAL cable.

Further, the CEC support device is assigned a unique physical address. In the AV system of Fig. 1, a physical address (0.0.0.0) is assigned to the television receiver 11, and a physical address (1.0.0.0) is assigned to the AV amplifier 12. Here, in a case where the BD recorder, the DVD player, the satellite tuner, and the like (not illustrated) are connected, for example, physical addresses such as (1.1.0.0), (1.2.0.0), and (1.3.0.0) may be allocated.

Further, a speaker group 13 is connected to the AV amplifier 12. The speaker group 13 includes, for example, speakers positioned at a front, a right front, a left front, a right rear, and a left rear of a user and a subwoofer speaker for bass output for implementing a 5.1CH surround sound.

In the AV system of Fig. 1, in a case where a mode in which the AV amplifier 12 outputs an audio (a system audio mode) is turned on, the AV amplifier 12 receives HDMI signals from the BD recorder (not illustrated) or the like, and transmits a video signal out of the HDMI signals to the television receiver 11. Further, in a case where the system audio mode is turned off, the AV amplifier 12 receives the HDMI signal from the BD recorder or the like, and directly transmits the HDMI signal from the BD recorder or the like to the television receiver 11 without change (performs HDMI pass-through).

Further, in the AV system of Fig. 1, each of the television receiver 11 and the AV amplifier 12 performs an operation based on a CEC message which is a control signal transmitted and received via a CEC line configured with the HDMI cable in accordance with a manipulation in each HDMI apparatus.

### <Acquisition of physical address and logical address>

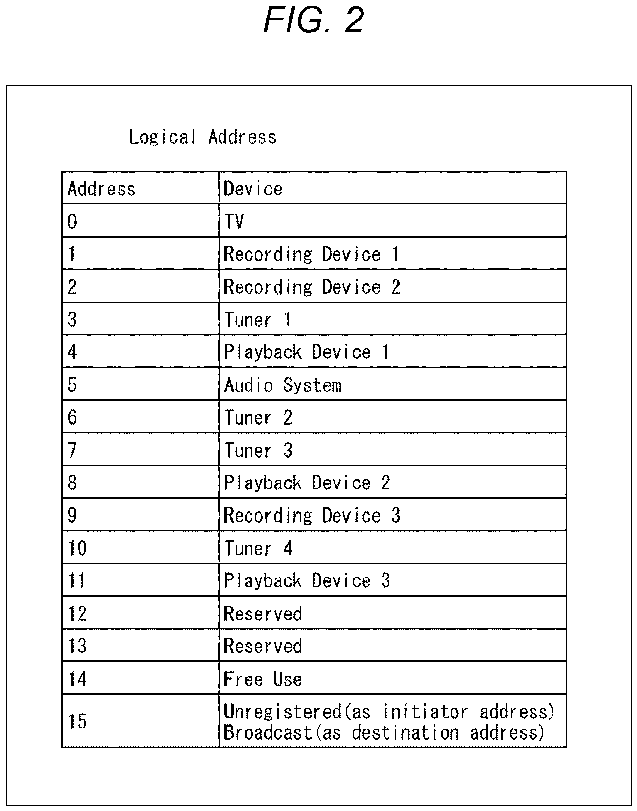

Next, acquisition of a physical address and a CEC logical address (also referred to as simply a logical address) of each device in the AV system of Fig. 1 will be described with reference to Fig. 2.

In a case where the AV amplifier 12 is connected to the television receiver 11 (the physical address is [0000], and the CEC logical address is {0}) via the HDMI cable, the AV amplifier 12 acquires the physical address [1000] from the television receiver 11 using a HDMI control protocol.

The CEC support device is specified to acquire the logical address at the time of HDMI connection. The CEC support device performs transmission and reception of the CEC message using the logical address. Fig. 2 illustrates a table indicating a correspondence between the device and the CEC logical address. "TV" in the device is a television receiver, a projector, or the like. "Recording Device" in the device is a BD recorder, a DVD recorder, or the like. "Tuner" in the device is a set topbox (STB) or the like. "Playback Device" in the device is a DVD player, a camcorder, or the like. "Audio System" in the device is an AV amplifier or the like.

The AV amplifier 12 is the CEC support device as described above. The AV amplifier 12 determines the logical address {5} as "Audio System" on the basis of the table in Fig. 2. In this case, the AV amplifier 12 recognizes that there is no device having the logical address {5} among other devices through a Polling Message of the CEC control protocol, and then decides the logical address {5} as its own logical address . Then, the AV amplifier 12 gives a notification indicating that the physical address [1000] is the CEC support device {5} to the television receiver 11 through a Report Physical Address of the CEC control protocol.

Further, for example, when the BD recorder (not illustrated) is connected to the AV amplifier 12 via the HDMI cable, the BD recorder acquires a physical address [1100] from the AV amplifier 12 using the HDMI control protocol.

When the BD recorder (not illustrated) is the CEC support device, the BD recorder decides the logical address {1} as "Recording Device" on the basis of the table in Fig. 2. In this case, the BD recorder (not illustrated) recognizes that there is no device having the logical address {1} among other devices through the Polling Message of the CEC control protocol, and then adds the logical address {1} as its own logical address . Then, the BD recorder (not illustrated) gives, for example, a notification indicating that the physical address [1100] is the CEC support device {1} to the television receiver 11 and the AV amplifier 12 through the Report Physical Address of the CEC control protocol.

Further, when the DVD player (not illustrated) is connected to the AV amplifier 12 via the HDMI cable, the DVD player (not illustrated) acquires, for example, a physical address [1200] from the AV amplifier 12 using the HDMI control protocol.

When the DVD player (not illustrated) is the CEC support device, the DVD player (not illustrated) decides a logical address {4} as "Playback Device" on the basis of the table in Fig. 2. In this case, the DVD player (not illustrated) recognizes that there is no device having the logical address {4} among other devices through the Polling Message of the CEC control protocol, and then adds the logical address {4} as its own logical address. Then, the DVD player (not illustrated) gives, for example, a notification indicating that the physical address [1200] is the CEC support device {4} to the television receiver 11 and the AV amplifier 12 through the Report Physical Address of the CEC control protocol.

### <Configuration example of television receiver>

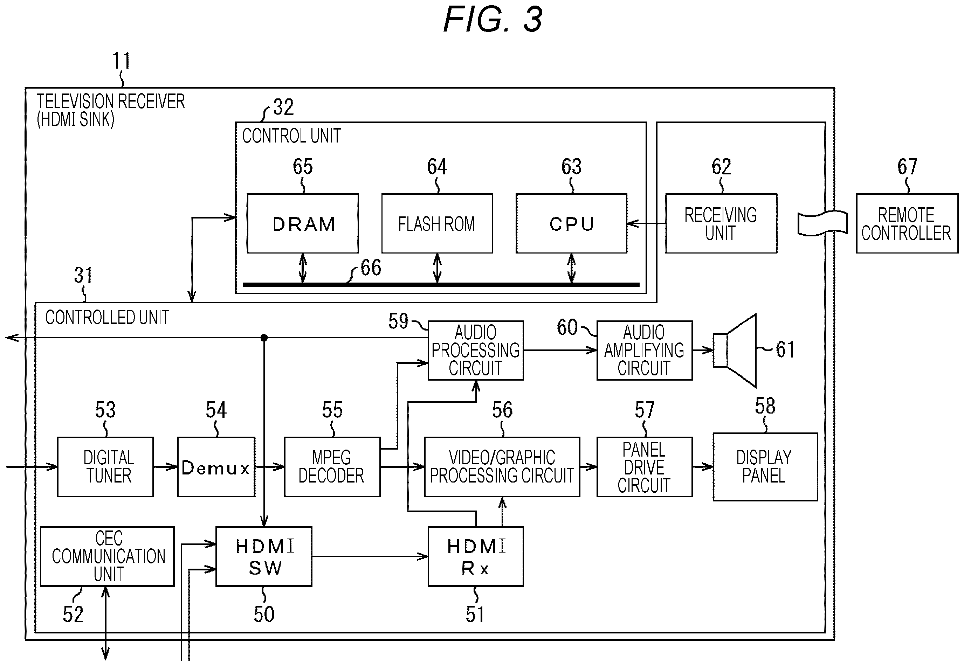

Next, a specific configuration example of the television receiver 11 will be described with reference to Fig. 3.

The television receiver 11 in Fig. 3 includes a controlled unit 31 and a control unit 32. The controlled unit 31 implements various kinds of functions of the television receiver 11 under the control of the control unit 32.

The controlled unit 31 includes an HDMI switcher (HDMI SW) 50, an HDMI receiving unit (HDMI Rx) 51, a CEC communication unit 52, a digital tuner 53, a demultiplexer (Demux) 54, a moving picture expert group (MPEG) decoder 55, a video/graphic processing circuit 56, a panel drive circuit 57, a display panel 58, an audio processing circuit 59, an audio amplifying circuit 60, a speaker 61, and a receiving unit 62. Further, the control unit 32 includes a central processing unit (CPU) 63, a flash ROM 64, a dynamic random access memory (DRAM) 65, and an internal bus 66.

The HDMI switcher 50 selectively connects two HDMI terminals (not illustrated) to the HDMI receiving unit 51.

The HDMI receiving unit 51 is selectively connected to any one of the two HDMI terminals (not illustrated) via the HDMI switcher 50. The HDMI receiving unit 51 receives baseband video and audio signals (HDMI signals) transmitted in one direction from an external device (the HDMI source, or the HDMI repeater) connected to the two HDMI terminals (not illustrated) through communication conforming to HDMI. The HDMI receiving unit 51 supplies the video signal out of the received HDMI signals to the video/graphic processing circuit 56, and supplies the audio signal out of the received HDMI signals to the audio processing circuit 59.

Under the control of the CPU 63, the CEC communication unit 52 performs transmission and reception of the CEC message with the HDMI repeater or the HDMI source via the CEC line.

The digital tuner 53 processes a television broadcast signal input from an antenna terminal (not illustrated), and supplies a predetermined transport stream (TS) corresponding to a channel selected by the user to the demultiplexer 54.

The demultiplexer 54 extracts a partial TS (a TS packet of the video signal and a TS packet of the audio signal) corresponding to the channel selected by the user from the TS supplied from the digital tuner 53, and supplies the partial TS to the MPEG decoder 55.

Further, the demultiplexer 54 extracts program specific information/service information (PSI/SI) from the TS supplied from the digital tuner 53 and supplies the PSI/SI to the CPU 63. A plurality of channels is multiplexed in the TS supplied from the digital tuner 53. The process of extracting a partial TS of an arbitrary channel from the TS through the demultiplexer 54 can be performed by acquiring information of a packet ID (PID) of an arbitrary channel from PSI/SI (PAT/PMT).

The MPEG decoder 55 performs a decoding process on a video packetized elementary stream (PES) packet configured with the TS packet of the video signal supplied from the demultiplexer 54, and supplies a resulting video signal to the video/graphic processing circuit 56. Further, the MPEG decoder 55 performs a decoding process on an audio PES packet configured with the TS packet of the audio signal supplied from the demultiplexer 54, and supplies a resulting audio signal to the audio processing circuit 59.

The video/graphic processing circuit 56 performs a scaling process, a graphics data superimposing process, and the like on the video signal supplied from the HDMI receiving unit 51 or the MPEG decoder 55 if necessary, and supplies the resulting video signal to the panel drive circuit 57.

On the basis of the video signal supplied from the video/graphic processing circuit 56, the panel drive circuit 57 drives the display panel 58 to display a video. The display panel 58 includes, for example, a liquid crystal display (LCD) or a plasma display panel (PDP).

The audio processing circuit 59 performs a necessary process such as digital to analog (D/A) conversion on the audio signal supplied from the HDMI receiving unit 51 or the MPEG decoder 55, and supplies the resulting audio signal to the audio amplifying circuit 60.

The audio amplifying circuit 60 amplifies the analog audio signal supplied from the audio processing circuit 59 and supplies the amplified analog audio signal to the speaker 61. The speaker 61 outputs a sound corresponding to the analog audio signal from the audio amplifying circuit 60.

The receiving unit 62 receives, for example, an infrared remote control signal transmitted from a remote controller 67, and supplies the infrared remote control signal to the CPU 63. By manipulating the remote controller 67, the user can manipulate the television receiver 11 and other CEC support devices connected to the television receiver 11 via the HDMI cable.

The CPU 63, the flash ROM 64, and the DRAM 65 are connected to one another via the internal bus 66. The CPU 63 controls operations of the respective units of the television receiver 11. The flash ROM 64 stores control software and data. The DRAM 65 constitutes a work area or the like of the CPU 63. In other words, the CPU 63 develops software or data read from the flash ROM 64 on the DRAM 65, activates the software, and controls the respective units of the television receiver 11.

### <Configuration of example of AV amplifier>

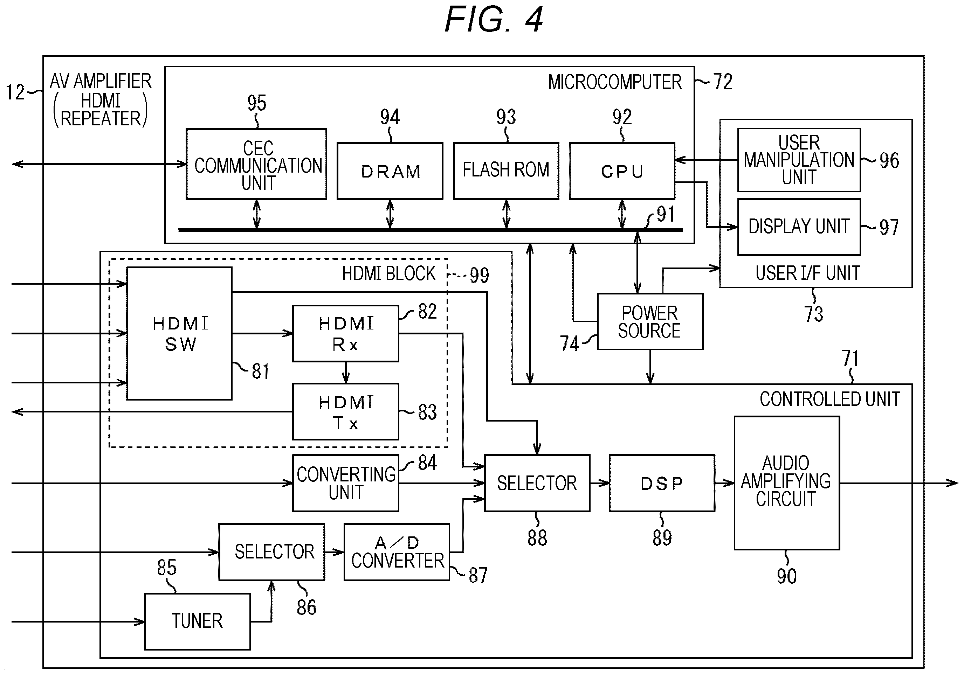

Next, a specific configuration example of the AV amplifier 12 will be described with reference to Fig. 4.

The AV amplifier 12 illustrated in Fig. 4 includes a controlled unit 71, a microcomputer 72, a user interface (I/F) unit 73, and a power source 74. The controlled unit 71 implements various kinds of functions of the AV amplifier 12 under the control of the microcomputer 72. The user I/F unit 73 receives an input of a signal corresponding to the manipulation of the user, and presents information to the user. The power source 74 supplies electric power to each of the controlled unit 71 and the user I/F unit 73 under the control of the microcomputer 72.

The controlled unit 71 includes an HDMI switcher (HDMI SW) 81, an HDMI receiving unit (HDMIRx) 82, an HDMI transmitting unit (HDMI Tx) 83, a converting unit 84, a tuner 85, a selector 86, an analog to digital (A/D) converter 87, a selector 88, a DSP 89, and an audio amplifying circuit 90. The microcomputer 72 includes an internal bus 91, a CPU 92, a flash ROM 93, a DRAM 94, and a CEC communication unit 95. Further, the user I/F unit 73 includes a user manipulation unit 95 and a display unit 96.

Note that a configuration including the HDMI switcher 81, the HDMI receiving unit 82, and the HDMI transmitting unit 83 is hereinafter referred to as an HDMI block 99. In a case where the system audio mode is turned off, the HDMI block 99 receives the HDMI signal from a BD recorder 14, and transmits the HDMI signal from the BD recorder 14 to the television receiver 11 without change (performs HDMI pass-through).

The HDMI switcher 81 selectively connects a plurality of HDMI terminals (not illustrated) to the HDMI receiving unit 82.

The HDMI receiving unit 82 is selectively connected to any one of a plurality of HDMI terminals (not illustrated) via the HDMI switcher 81. The HDMI receiving unit 82 receives baseband video and audio signals (HDMI signals) transmitted in one direction from an external device (the HDMI source) connected to a plurality of HDMI terminals (not illustrated) through communication conforming to HDMI. The HDMI receiving unit 82 supplies the audio signal out of the received HDMI signals to the selector 88 or supplies the received HDMI signals to the HDMI transmitting unit 83 without change.

The HDMI transmitting unit 83 transmits the baseband video and audio signals (HDMI signals) supplied from the HDMI receiving unit 82 through the HDMI terminal (not illustrated) through communication conforming to HDMI.

With the above configuration, the AV amplifier 12 functions as an HDMI repeater.

The converting unit 84 generates a clock LRCK having the same frequency (for example, 44.1 kHz) as a sampling frequency of the audio signal, a master clock MCK having a frequency of, for example, 512 times or 256 times as high as the sampling frequency, left and right audio data LDATA and RDATA of 24 bits present for each period of the clock LRCK, and a bit clock BCK which is synchronized with each bit of data from a digital optical signal input from an optical input terminal (not illustrated), and supplies the generated clocks and data to the selector 88.

The tuner 85 processes a FM broadcast signal input from an antenna terminal (not illustrated) that receives the FM broadcast signal received by an FM reception antenna (not illustrated), and outputs left and right analog signals corresponding to a channel selected by the user audio signal to the selector 86.

The selector 86 selectively extracts an analog audio signal input from an analog audio input terminal (not illustrated) that receives right and left analog audio signals supplied from an external device (not illustrated) or an analog audio signal supplied from the tuner 85 and supplies the analog audio signal to the A/D converter 87.

The A/D converter 87 converts the analog audio signal supplied from the selector 86 into a digital audio signal and supplies the digital audio signal to the selector 88.

The selector 88 selectively extracts an audio signal supplied from the HDMI receiving unit 82, an audio signal supplied from the converting unit 84, or the audio signal supplied from the A/D converter 87, and supplies the extracted audio signal to the DSP 89.

The DSP 89 processes the audio signal supplied from the selector 88. For example, the DSP 89 performs a process of generating an audio signal of each channel to implement a 5.1 CH surround sound, a process of giving a predetermined sound field characteristic, a process of converting a digital signal into an analog signal, and the like, and supplies the resulting signal to the audio amplifying circuit 90.

The audio amplifying circuit 90 amplifies a front left audio signal, a front right audio signal, a front center audio signal, a rear left audio signal, a rear right audio signal, and a sub woofer audio signal which are the audio signals supplied from the DSP 89, and outputs the amplified audio signals to an audio output terminal (not illustrated). Note that a front left speaker, a front right speaker, a front center speaker, a rear left speaker, a rear right speaker, and a sub woofer speaker constituting the speaker group 13 are connected to the audio output terminal (not illustrated).

The CPU 92, the flash ROM 93, the DRAM 94, and the CEC communication unit 95 are connected via the internal bus 91. The CPU 92 controls the operations of the respective units of the AV amplifier 12. The flash ROM 93 stores control software and manages data. The DRAM 94 constitutes a work area or the like of the CPU 92. The CPU 92 develops software and data read from the flash ROM 93 onto the DRAM 94, activates the software, and controls the respective units of the AV amplifier 12.

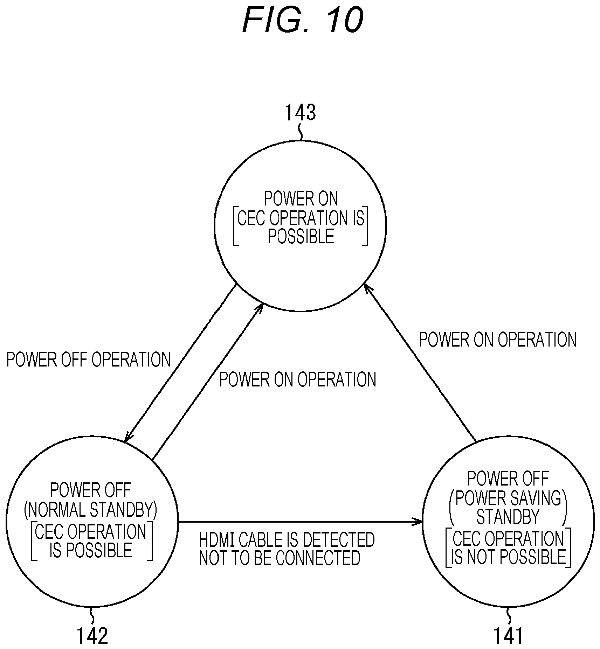

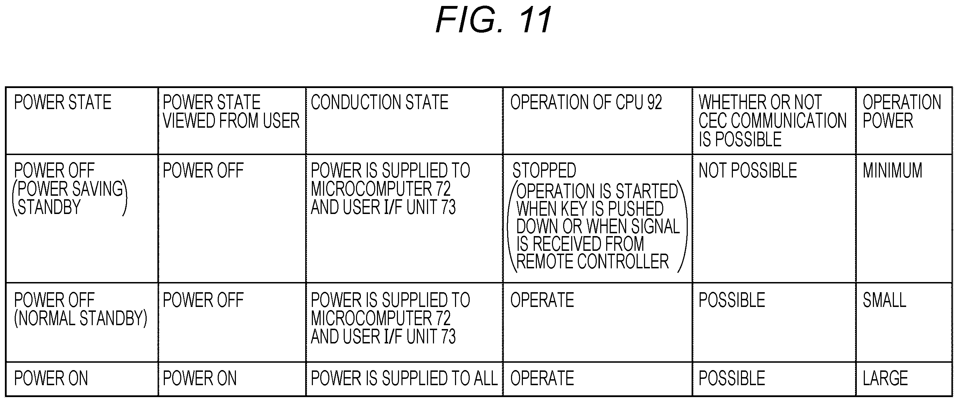

The CEC communication unit 95 performs transmission and reception of the CEC message via the CEC line with the HDMI sink, the HDMI repeater, or the HDMI source under the control of the CPU 92. Further, the CEC communication unit 95 manages power states of a power ON state, a normal standby power OFF state, and a power saving standby power OFF state. Note that the power states of the power ON state, normal standby power OFF state, and the power saving standby power OFF state will be described later in detail with reference to Figs. 10 and 11.

Further, a user manipulation unit 96 and a display unit 97 are connected to the CPU 92.

The user manipulation unit 96 includes keys, buttons, dials, a remote controller, and the like arranged in a housing (not illustrated) of the AV amplifier 12. In other words, the user manipulation unit 96 receives various kinds of manipulation inputs including various kinds of key manipulation inputs, a dial manipulation input, a power ON/OFF manipulation input of a power button, and a power source manipulation from a remote controller (not illustrated), generates a corresponding manipulation signal, and supplies the manipulation signal to the CPU 92 of the control unit 72. The display unit 97 includes an LCD, a power indication lamp installed separately from the LCD, or the like, and displays an operation state of the AV amplifier 12, a manipulation state of the user, a power state of the power source 74, and the like. The user can perform selection of an audio output from the AV amplifier 12, a volume setting, selection of the tuner 85, an operation setting, and the like by manipulating the user manipulation unit 96.

### <Configuration examples of HDMI transmitting unit and HDMI receiving unit>

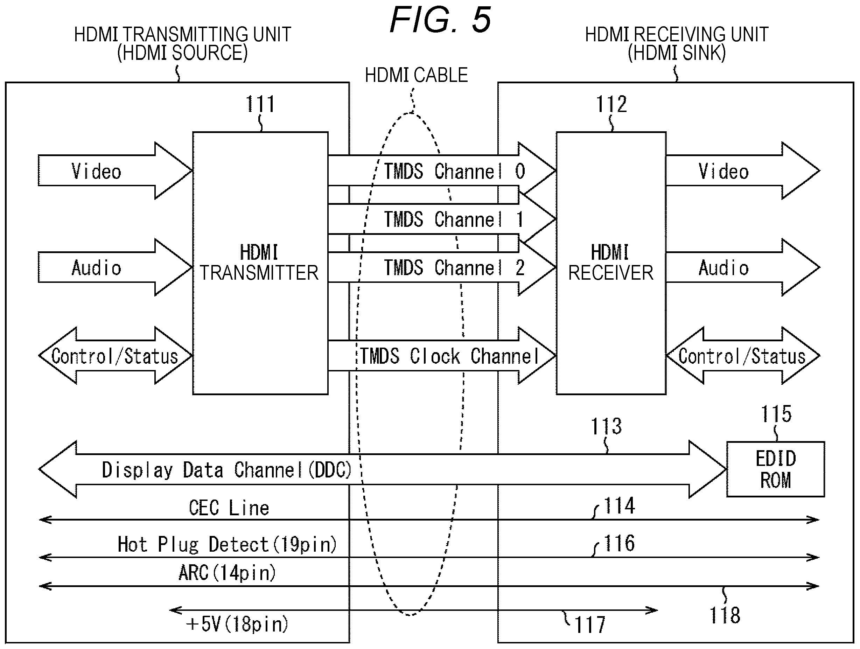

Next, configuration examples of the HDMI transmitting unit (HDMI transmitting unit 83) and the HDMI receiving unit (HDMI receiving unit 51, HDMI receiving unit 82) will be described with reference to Fig. 5.

The HDMI transmitting unit (HDMI source) transmits differential signal corresponding to pixel data of an uncompressed image corresponding to one screen to the HDMI receiving unit (HDMI sink) in one direction through a plurality of channels in an effective image interval (hereinafter also referred to as an "active video interval") which is an interval obtained by subtracting a horizontal return interval and a vertical return interval from an interval from one vertical synchronization signal to a next vertical synchronization signal, and transmits a differential signal corresponding to audio data, control data, other auxiliary data, and the like associated with at least an image to the HDMI receiving unit in one direction through a plurality of channels in the horizontal return interval or the vertical return interval.

In other words, the HDMI transmitting unit has a transmitter 111. For example, the transmitter 111 converts pixel data of an uncompressed image into a corresponding differential signal, and serially transmits the differential signal to the HDMI receiving unit connected via the HDMI cable in one direction through a plurality of channels, that is, three transition minimized differential signaling (TMDS) channels #0, #1, and #2.

Further, the transmitter 111 converts the audio data associated with the uncompressed image, furthermore, the necessary control data, other auxiliary data, and the like into corresponding differential signals, and serially transmits the differential signals to the HDMI receiving unit connected via the HDMI cable in one direction through three TMDS channels #0, #1, and #2 (a TMDS Channel 0, a TMDS Channel 1, and a TMDS Channel 2 in the drawing).

Further, the transmitter 111 transmits pixel clocks synchronized with the pixel data to be transmitted through the three TMDS channels #0, #1, and #2 to the HDMI receiving unit connected via the HDMI cable through a TMDS clock channel. Here, in one TMDS channel #i (i = 0, 1, and 2), 10 bits of pixel data are transmitted during one clock of pixel clock.

In the active video interval, the HDMI receiving unit receives the differential signal corresponding to the pixel data which is transmitted from the HDMI transmitting unit in one direction through a plurality of channels. Further, the HDMI receiving unit receives the differential signals corresponding to the audio data and the control data which are transmitted from the HDMI transmitting unit in one direction through a plurality of channels in the horizontal return interval or the vertical return interval.

In other words, the HDMI receiving unit has a receiver 112. In the TMDS channels #0, #1, and #2, the receiver 112 receives the differential signal corresponding to the pixel data and the differential signals corresponding to the audio data and the control data which are transmitted from the HDMI transmitting unit connected via the HDMI cable in one direction in synchronization with the pixel clock transmitted from the HDMI transmitting unit through the TMDS clock channel.

As the transmission channel of the HDMI system including the HDMI transmitting unit and the HDMI receiving unit, there are transmission channels called a display data channel (DDC) 113 and a CEC line 114 in addition to the three TMDS channels #0 to #2 serving as the transmission channels of serially transmitting the pixel data and the audio data from the HDMI transmitting unit to the HDMI receiving unit in one direction in synchronization with the pixel clock and the TMDS clock channel serving as the transmission channel for transmitting the pixel clock.

The DDC 113 includes two signal lines (not illustrated) included in the HDMI cable and is used when the HDMI transmitting unit reads enhanced extended display identification data (E-EDID) from the HDMI receiving unit connected via the HDMI cable.

In other words, in addition to the HDMI receiver 112, the HDMI receiving unit includes an EDID read only memory (ROM) 115 that stores the E-EDID which is performance information related to its own performance (configuration/capability). The HDMI transmitting unit reads the E-EDID of the HDMI receiving unit from the HDMI receiving unit connected via the HDMI cable through the DDC 113, and recognizes, for example, a format (profile) of an image corresponding to an electronic device included in the HDMI receiving unit, for example, RGB, YCbCr 4:4:4, or YCbCr 4:2:2 on the basis of the E-EDID.

The CEC line 114 includes one unillustrated signal line included in the HDMI cable and is used for performing two-way communication of control data between the HDMI transmitting unit and the HDMI receiving unit.

Further, the HDMI cable includes a line 116 connected to a pin called hot plug detect (HPD) . The source device can detect a connection of the sink device using the line 116. Further, the HDMI cable includes a line 117 used to supply electric power from the source device to the sink device. An audio return channel (ARC) line 118 is used for transmitting an audio from the HDMI receiving unit to the HDMI transmitting unit.

### <TMDS transmission data structure>

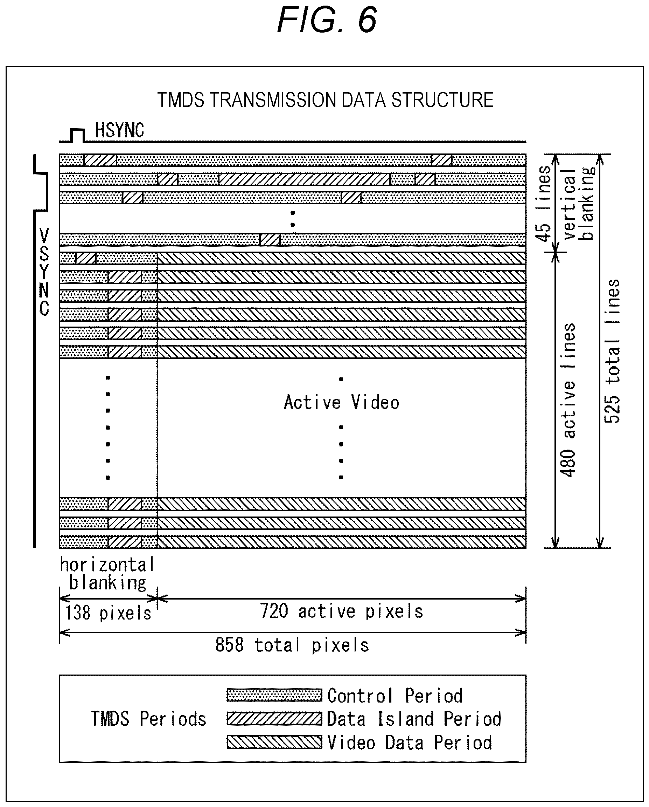

Next, a TMDS transmission data structure will be described with reference to Fig. 6. Here, Fig. 6 illustrates an example of a transmission interval (period) in which various kinds of transmission data are transmitted through the three TMDS channels #0, #1, and #2 of HDMI. Note that Fig. 6 illustrates intervals of various kinds of transmission data in a case where a progressive image of 720 × 480 pixels (width × length) is transmitted through the TMDS channels #0, #1, and #2.

In the video field in which transmission data is transmitted through the three TMDS channels #0, #1, and #2 of HDMI, there are three types of intervals, that is, a video data interval (Video Data period), a data island interval (Data Island period), and a control interval (Control period).

Here, the video field interval is an interval from a risingedge (activeedge) of a certain vertical synchronization signal to a rising edge of a next vertical synchronization signal and is divided into a horizontal blanking period (horizontal blanking), a vertical blanking period (vertical blanking), and an active video interval (Active Video) which is an interval obtained by excluding the horizontal blanking period and the vertical blanking period from the video field interval.

The video data interval is allocated to the active video interval. Data of effective pixels (active pixels) corresponding to 720 pixels × 480 lines constituting an uncompressed image data of one screen is transmitted in the video data interval.

The data island interval and the control interval are allocated to the horizontal blanking period and the vertical blanking period. The auxiliary data (auxiliary data) is transmitted in the data island interval and the control interval.

In other words, the data island interval is allocated to parts of the horizontal blanking period and the vertical blanking period. Data which does not relate to control among the auxiliary data, for example, a packet of audio data is transmitted in the data island interval.

The control interval is allocated to other parts of the horizontal blanking period and the vertical blanking period. Data related to control among the auxiliary data, for example, a vertical synchronization signal, a horizontal synchronization signal, a control packet, and the like are transmitted in the control interval.

Here, in current HDMI, a frequency of the pixel clock transmitted through the TMDS clock channel is, for example, 165 MHz, and in this case, a transmission rate of the data island interval is about 500 Mbps.

### <Pin arrangement of HDMI terminal>

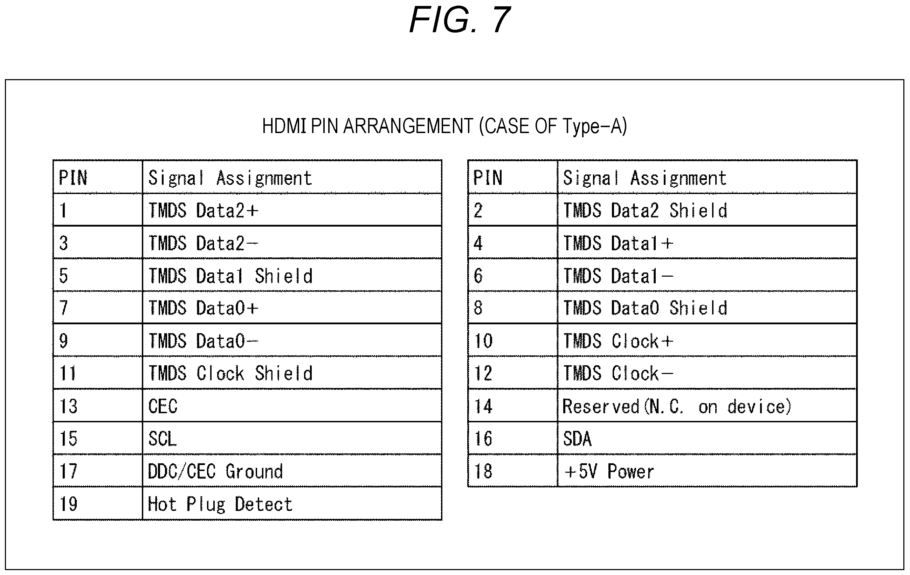

Next, a pin arrangement of the HDMI terminal will be described with reference to Fig. 7. Note that Fig. 7 illustrates an example of a type A (type-A) of pin arrangement of the HDMI terminal.

Two lines which are differential lines through which TMDS Data #i+ and TMDS Data #i- which are differential signals of the TMDS channel #i are transmitted are connected to pins to which the TMDS Data #i + is allocated (pins having pin numbers of 1, 4, and 7) and pins to which the TMDS Data #i- is allocated (pins having pin numbers of 3, 6, and 9).

Further, the CEC line 114 through which the CEC signal serving as the control data is transmitted is connected to a pin having a pin number of 13, and a pin having a pin number of 14 is a free (reserved) pin. Further, a line through which a serial data (SDA) signal such as the E-EDID is transmitted is connected to a pin having a pin number of 16, and a line through which a serial clock (SCL) signal serving as a clock signal used for synchronization at the time of transmission and reception of the SDA signal is transmitted is connected to a pin having a pin number of 15. The DDC 113 includes the line through which the SDA signal is transmitted and the line through which the SCL signal is transmitted.

Further, the line 116 used when the source device detects a connection of the sink device as described above is connected to a pin having a pin number of 19. Further, the line 117 for supplying electric power as described above is connected to a pin having a pin number of 18.

### <CEC data structure>

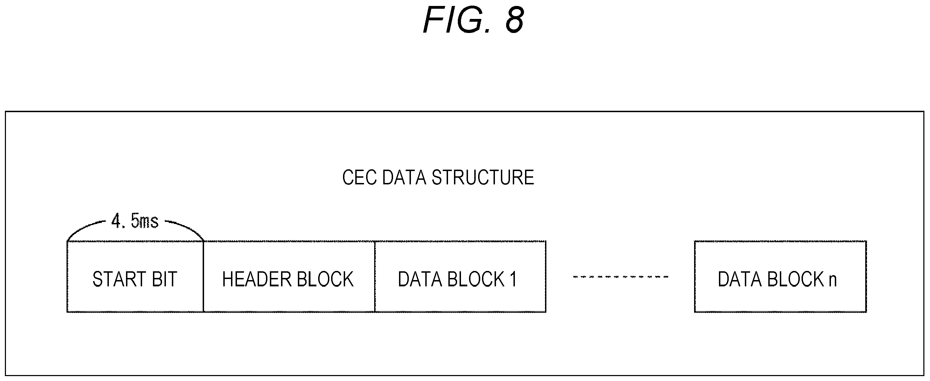

Next, a block configuration of data transmitted through the CEC line will be described with reference to Fig. 8. In the CEC line, one block is transmitted in 4.5 msec. When data transmission starts, a start bit is arranged, a header block is arranged subsequently, and then an arbitrary number (n) of data blocks 1 to n including data to be actually transmitted are arranged.

### <Header block data structure>

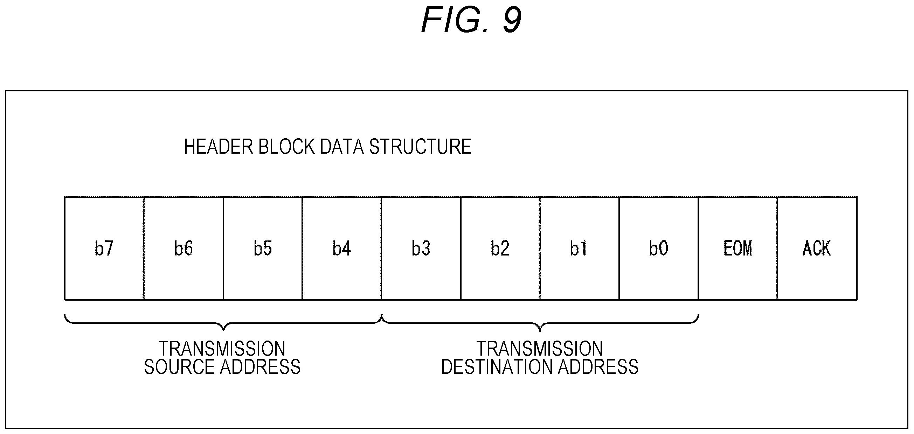

Next, a data structure of the header block will be described with reference to Fig. 9. Fig. 9 illustrates an example of the data structure of the header block. A 4-bit logical address (b4 to b7) indicating a transmission source and a 4-bit logical address (b0 to b3) indicating a transmission destination are arranged in the header block. With the structure of the header block, it is possible to determine whether or not the transmission destination of data received through the CEC line is its own device and further recognize the transmission source in a case where the transmission destination is its own device.

### <Power source state and transition thereof>

Next, the power state of the AV amplifier 12 and transition thereof will be described with reference to Figs. 10 and 11.

In the power state of the AV amplifier 12, as illustrated in Fig. 10, there are three types of power states, that is, states 141 and 142 which are power OFF states and a state 143 which is a power ON state.

The power ON state 143 is a state in which electric power is supplied to all components, and for example, in the display unit 97 including the power indication lamp which is turned on when the power source is in an ON state, the power indication lamp is turned on as illustrated in a lowermost line of Fig. 11, and thus the power ON state 143 is a state in which it is turned on even when seen from the user and a state in which all functions can be implemented. Therefore, in the state 143, the AV amplifier 12 serving as the HDMI repeater can also communicate with the television receiver 11 serving as the HDMI sink via the HDMI cable, and operating power is also larger than those in the states 141 and 142.

On the other hand, in the states 141 and 142 which are the power OFF states, illustrated in two lines from the top in Fig. 11, the power indication lamp and the like included in the display unit 97 are turned off, and the operation state seen from the user is a state in which the power source is turned off.

Among these, the state 141 illustrated in an uppermost line of Fig. 11 is a state in which the power source is turned off and a power saving standby state in which the HDMI cable is removed, it is not connected to the television receiver 11 serving as the HDMI sink, and a clock of the microcomputer 72 is stopped, so that communication by the CEC communication unit 95 is unable to be performed. More specifically, it is a state in which electric power is supplied to the microcomputer 72 and the user manipulation unit 96 including a key input unit of a manipulation key, a remote controller input unit, and the like. However, since the operations of the CPU 92 and the CEC communication unit 95 are in a stopped state, it is a state in which the CEC communication is disabled. At this time, for example, if the power button of the main body of the AV amplifier 12 is pushed or the power ON manipulation from the remote controller is performed, it transitions to the power OFF (normal standby) state 142 using this as a trigger, and it transitions to the state 143 which is the power ON state. In the state 141, since the CPU clock is stopped, the operating power is extremely small (minimum).

On the other hand, in the state 142 illustrated in the second line from the top in Fig. 11, since the power source is turned off but it is based on the premise that the HDMI cable is connected, it is connected to the television receiver 11 serving as the HDMI sink, and since electric power is supplied through the user manipulation unit 96 including the key input unit of the manipulation key, the remote controller input unit, or the like, and electric power is further supplied to the CPU 92 and the CEC communication unit 95, the CEC communication can be performed. Therefore, if the television receiver 11 serving as the HDMI sink is powered on, it can transition to the state 143 which is the power ON state in conjunction with the CEC communication, and if the television receiver 11 is turned off, it can further transition to the state 142. Further, if the connection of the HDMI cable between the television receiver 11 serving as the HDMI sink and the AV amplifier 12 serving as the HDMI repeater is disconnected, the state is detected, and it transitions to the state 141. Therefore, the operating power in the state 142 which is the normal standby power OFF state is smaller than that is the state 143 which is the power ON state, but larger than that in the state 141 which is the power saving standby power OFF state.

As a result, if the HDMI cable for establishing the connection with the television receiver 11 serving as the HDMI sink is removed, the AV amplifier 12 serving as the HDMI repeater detects the state and can minimize the power consumption.

### <Power saving standby transition determination process in first embodiment>

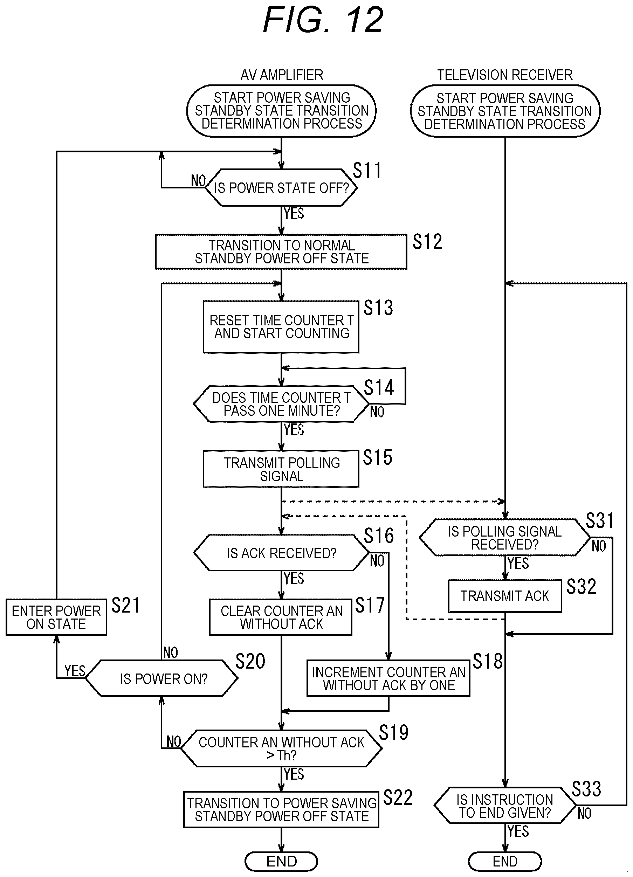

Next, a power saving standby transition determination process will be described with reference to a flowchart of Fig. 12.

In step S11, the CEC communication unit 95 determines whether or not the power source of the AV amplifier 12 which is its own device is in the OFF state, and a similar processing is repeated until it is determined that the power source is in the OFF state. In step S11, for example, in a case where the power button in the user manipulation unit 96 is manipulated and the AV amplifier 12 is powered off or in a case where a signal for turning off the power source from the television receiver 11 serving as the HDMI sink is recognized by the CEC communication, the process proceeds to step S12.

In step S12, the CPU 92 stops power supply to components other than a function for receiving inputs from the microcomputer 72, the user manipulation input unit 96, and the like. Through this process, the operation state transitions from the state 143 which is the power ON state to the state 142 which is the normal standby power OFF state.

In step S13, the CEC communication unit 95 starts counting of an internal time counter T.

In step S14, the CEC communication unit 95 determines whether or not the time counter T passes a predetermined time, for example, one minute, and repeats a similar process until one minute elapses. Further, in a case where it is determined in step S14 that one minute elapses, the process proceeds to step S15.

In step S15, the CEC communication unit 95 transmits a polling signal to the television receiver 11 serving as the HDMI sink. More particularly, the CEC communication unit 95 constructs a header block such as "50" using a logical address {5} of its own device serving as the transmission source and a logical address {0} of the television receiver 11 serving as the transmission destination, and generates and transmits a Polling Message of a CEC controlprotocol such as 50 <polling>. Here, for the sake of simplicity of description, an example in which the header block is constructed by using a logical address including a decimal number without change has been described, but each one is indicated by 4 bits as described above with reference to Fig. 9.

In step S31, the CEC communication unit 52 of the television receiver 11 determines whether or not the polling signal is received by its own device. More particularly, the CEC communication unit 52 determines whether or not a polling message in which the logical address serving as the transmission destination indicates its own device is received. In step S31, in a case where the polling signal is received by its own device, the process proceeds to step S32.

In step S32, the CEC communication unit 52 transmits an ACK to the AV amplifier 12 serving as the transmission source of the transmitted polling signal. In other words, in this case, the CEC communication unit 52 constructs a header block including "05", for example, using the logical address {0} serving as the transmission source and the logical address {5} serving as the transmission destination, and transmits an ACK such as 05<ACK>.

In step S33, the CEC communication unit 52 determines whether or not an instruction to end the operation is given, and in a case where the instruction to end is not given, the process returns to step S31, and the subsequent process is repeated. Then, in a case where the instruction to end is given in step S33, the process ends.

Further, in step S16, the CEC communication unit 95 of the AV amplifier 12 determines whether or not an ACK corresponding to the polling signal is received within a predetermined period time after the polling signal transmitted in the process of step S15 is transmitted. More particularly, it is determined whether or not an ACK indicating that its own device is the transmission destination, and the transmission source is the television receiver 11 serving as the HDMI sink in the header block is received within a predetermined period of time after the polling signal is transmitted.

In step S16, in a case where the ACK is received within a predetermined period of time after the polling signal is transmitted, the process proceeds to step S17.

In step S17, the CEC communication unit 95 clears a counter AN without ACK, and the process proceeds to step S19.

In other words, in this case, since an ACK is received from the television receiver 11 which is the transmission destination of the polling signal and serves as the HDMI sink is received within a predetermined period of time after the polling signal is transmitted, it is recognized that the television receiver 11 and the AV amplifier 12 are connected via the HDMI cable, and the counter AN without ACK is cleared.

On the other hand, in a case where the ACK is not received within a predetermined period of time after the polling signal is transmitted in step S16, the process proceeds to step S18.

In step S18, the CEC communication unit 95 increments the counter AN without ACK by 1, and the process proceeds to step S19.

In other words, in this case, since no ACK is received from the television receiver 11 which is the transmission destination of the polling signal and serves as the HDMI sink is received within a predetermined period of time after the polling signal is transmitted, it is recognized that the television receiver 11 and the AV amplifier 12 are not connected via the HDMI cable, and the counter AN without ACK is incremented by one.

In step S19, the CEC communication unit 95 determines whether or not the counter AN without ACK is larger than a predetermined number of times Th, for example, one indicated by Th = 1 (whether or not it is two or more), and in a case where the counter AN without ACK is not larger than the predetermined number of times Th, the process proceeds to step S20.

In step S20, the CEC communication unit 95 determines whether or not the television receiver 11 is in the power ON state, for example, as the television receiver 11 is manipulated, and in a case where the television receiver 11 is in the power ON state, the process proceeds to step S21.

In step S21, the CPU 92 causes the AV amplifier 12 to enter the power ON state by supplying electric power to all the components, and the process returns to step S11. In other words, through this process, the operation state transitions from the state 142 to the state 143 in Fig. 10.

Further, in a case where it is determined that the power state is not the ON state in step S20, the process returns to step S13, and the subsequent process is repeated.

Further, in a case where the counter AN without ACK exceeds two which is a predetermined number of times in step S19, the process proceeds to step S22, and the CEC communication unit 95 gives a notification indicating a state in which there is no connection with the television receiver 11 via the HDMI cable to the CPU 92. In response to the notification, the CPU 92 causes the power supply of its own device to be also stopped and causes the operation state to transition to the power saving standby power OFF state. Through this process, transition from the state 142 which is the normal standby power OFF state in Fig. 10 to the state 141 which is the power saving standby power OFF state is performed.

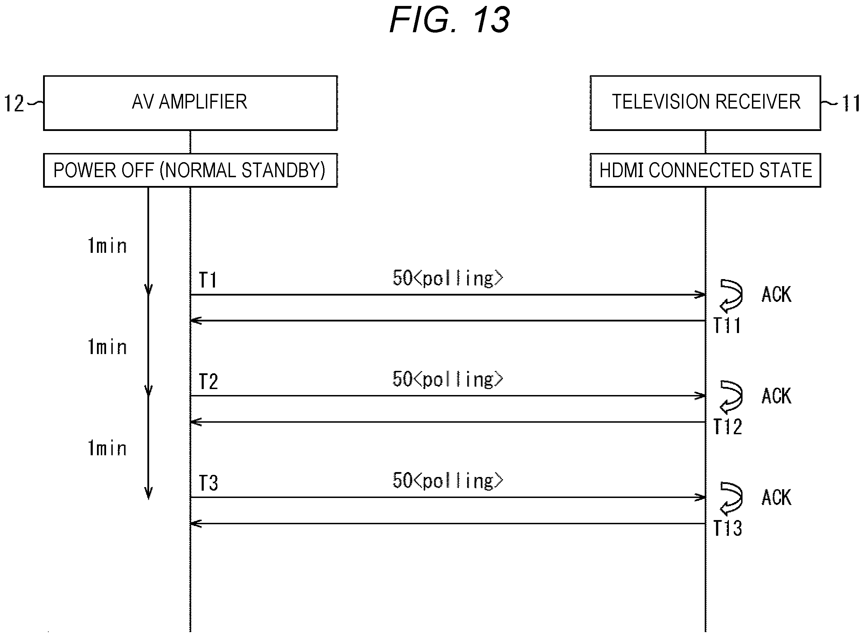

In other words, as illustrated in Fig. 13, if the AV amplifier 12 is turned off, the polling signal is transmitted to the television receiver 11 serving as the HDMI sink at times T1, T2, and T3 at intervals of one minute. At this time, as illustrated in Fig. 13, when an ACK is received from the television receiver 11 at each of times T11, T12, and T13 within a predetermined period of time from the times T1, T2, and T3, the counter AN without ACK is cleared each time, and thus the predetermined number of times Th does not exceed two in step S19, and thus the process of steps S13 to S21 is repeated.

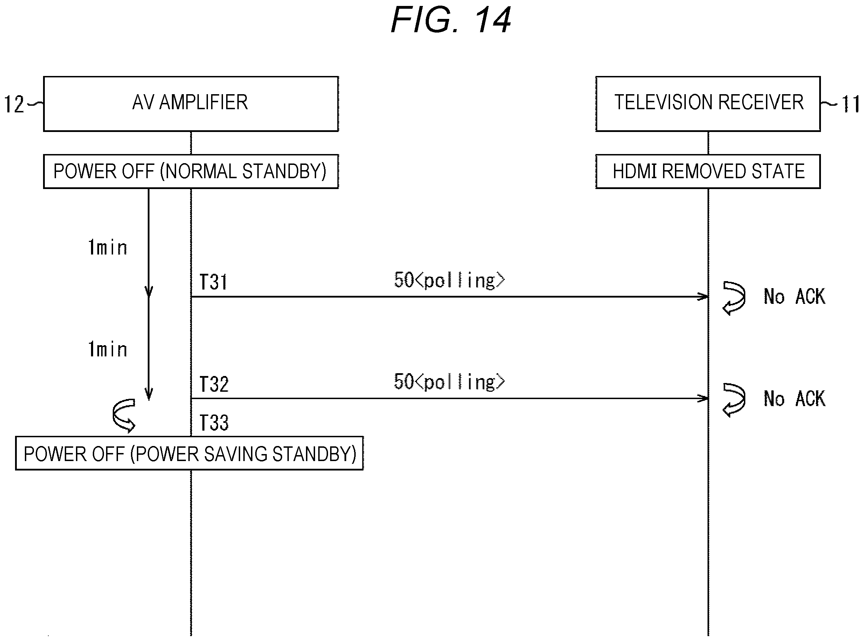

On the other hand, as illustrated in Fig. 14, in a case where the HDMI cable connecting the AV amplifier 12 with the television receiver 11 is removed, and the polling signal is transmitted at intervals of one minute after the AV amplifier 12 is turned off, if the polling signal is transmitted at a timing indicated by the time T31, and it becomes a state (No ACK) in which there is no ACK, the counter AN without ACK is incremented by one and becomes AN = 1.

Further, if the polling signal is transmitted at a timing indicated by the time T32 after one minute elapses, and it becomes the state in which there is no ACK, the counter AN without ACK is further incremented by one, becomes AN = 2, and becomes larger than Th = 1. For this reason, at the time T33 which is the next timing, the counter AN without ACK is recognized as exceeding the predetermined number of times Th, and transition to the power saving standby power OFF state is performed, and transition from the state 142 to the state 141 is performed.

In other words, in this case, the AV amplifier 12 is regarded as not being connected with the television receiver 11 serving as the HDMI sink via the HDMI cable, and transitions to the power saving standby power OFF state is performed, and thus when it becomes a state deviated from the state in which it is connected to the network connected via the HDMI cable, it is possible to minimize the power consumption.

As a result, in a case where it deviates from the standby state in which cooperation with other devices such as network standby is performed, it is possible to stop the power supply necessary for performing cooperation with other devices such as the network standby, and it is also possible to reduce the power consumption necessary for performing cooperation with other devices such as the network standby.

Note that, in order to determine whether or not the AV amplifier 12 is in the state in which it is connected to the television receiver 11 serving as the HDMI sink, a method of detecting by using other signal lines or the like is also considered. For example, a method of detecting a signal transmitted to an OPTICAL cable and regarding that the network standby is unnecessary when an optical signal received from a television is interrupted is also considered.

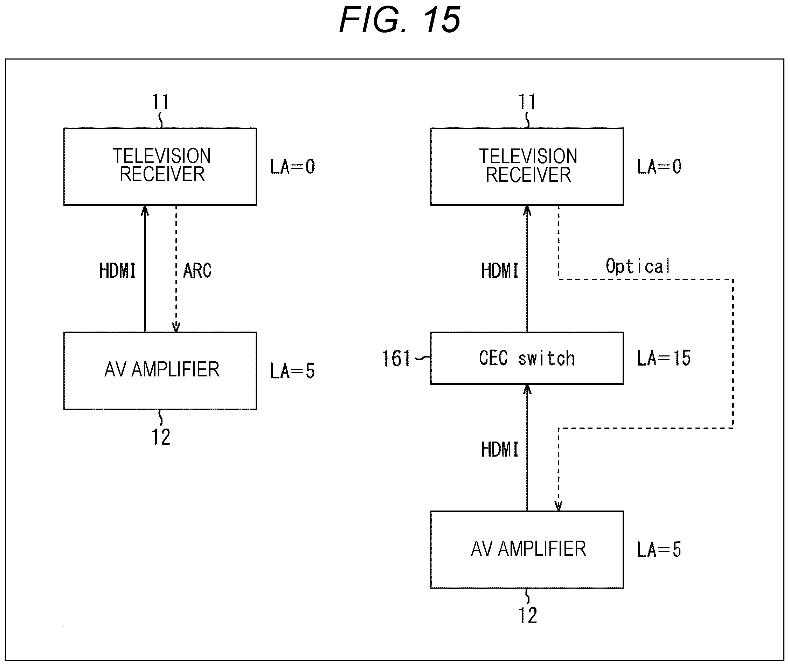

In other words, as illustrated in a left portion of Fig. 15, in a case where the television receiver 11 having a logical address {0} (LA = 0) and the AV amplifier 12 having a logical address {5} (LA = 5) are connected directly with each other via the HDMI cable or the OPTICAL cable, it is possible to cope with it by replacing the HDMI cable with the OPTICAL cable .

However, as illustrated in a right portion of Fig. 15, in a case where the CEC switch 161 having a logical address {15} (LA = 15) or the like is connected between the television receiver 11 having a logical address {0} (LA = 0) and the AV amplifier 12 having a logical address {5} (LA = 5), if the HDMI cable is used, since both the polling signal and the ACK are transmitted and received using the header block information of the transmission source and the transmission destination using the logical address, it is possible to implement a similar function even in a case where the CEC switch 161 is installed on a network path.

Therefore, when the technology of the present disclosure is applied, it is detected whether or not it is the network standby state with a simple configuration at a low cost, and it is possible to reduce the power consumption necessary for the network standby when it is not the network standby state, and the operation related to the network standby is regarded as being unnecessary.

Here, the example in which the HDMI sink is the television receiver 11, and the HDMI repeater is the AV amplifier 12 has been described above, but in a case where any configuration other than the television receiver 11 is the HDMI sink, it is possible to obtain similar effects by transmitting the polling signal to the other apparatus set as the HDMI sink, determining the presence or absence of ACK, and determining whether or not the HDMI cable is connected.

### <<2. Modified example of first embodiment>>

In the above example, it is determined whether or not the AV amplifier 12 is in the state in which it is connected to the television receiver 11 serving as the HDMI sink via the HDMI cable, and when the AV amplifier 12 is not in the connected state, transition from the normal standby power OFF state to the power saving standby power OFF state in the power OFF state is performed, so that the power consumption in the network standby state is further reduced.

However, in practice, the television receiver 11 serving as the HDMI sink has a function of transmitting the polling signal to the AV amplifier 12 serving as the HDMI repeater, receiving the ACK from the AV amplifier 12, and checking a device serving as the HDMI repeater with which the television receiver 11 is connected. Therefore, by using the polling signal from the television receiver 11, the polling signal may be prevented from being transmitted from the AV amplifier 12, and thus the power consumption can be further reduced.

### <Power saving standby transition determination process in modified example of first embodiment>

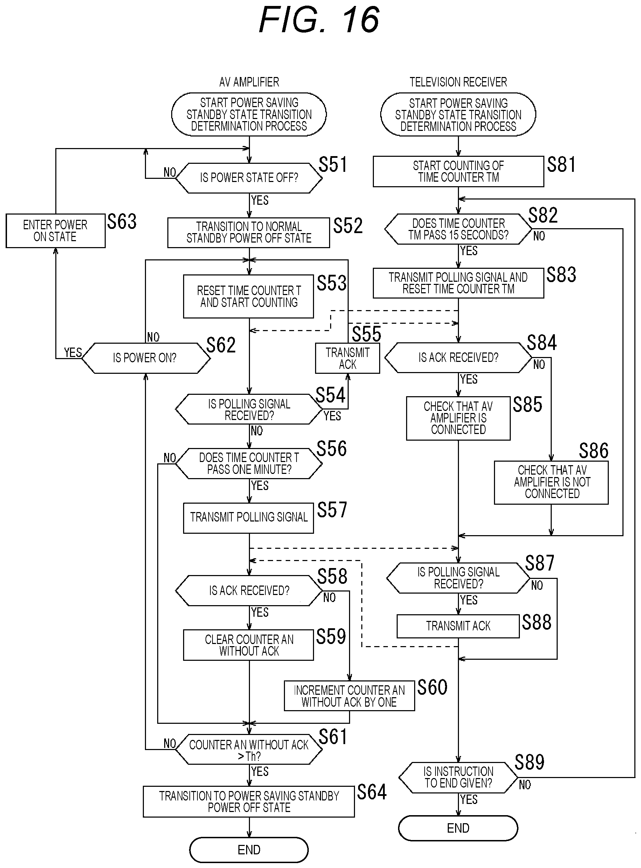

Next, a power saving standby transition determination process in a modified example will be described with reference to a flowchart of Fig. 16.

Further, a process of steps S57 to S64 and a process of steps S87 to S89 in the flowchart of Fig. 16 are similar to the process of steps S15 to S22 and the process of steps S31 to S33 in the flowchart of Fig. 12, and thus description thereof will be appropriately omitted.

In other words, in step S51, the CEC communication unit 95 determines whether or not the AV amplifier 12 which is its own device is in the power OFF state, and a similar processing is repeated until it is determined that the AV amplifier 12 is in the power OFF state. In step S11, for example, in a case where the power source is manipulated and the AV amplifier 12 is powered off, the process proceeds to step S52.

In step S52, the CPU 92 stops the power supply to components other than the function for receiving inputs of the microcomputer 72, the user manipulation input unit 96, or the like. Through this process, the operation state transitions from the state 143 which is the power ON state to the state 142 which is the normal standby power OFF state.

In step S53, the CEC communication unit 95 resets the internal time counter T and starts counting.

Here, in step S81, the CEC communication unit 52 of the television receiver 11 starts counting of a time counter TM.

In step S82, the CEC communication unit 52 determines whether or not the time counter TM passes 15 seconds, and in a case where the time counter TM does not pass 15 seconds, the process proceeds to step S87. In other words, the process of step S82, S87 to S89 is repeated until 15 seconds elapse. Then, in a case where 15 seconds elapse in step S82, the process proceeds to step S83.

In step S83, the CEC communication unit 52 transmits the polling signal to the AV amplifier 12 and resets the time counter TM. More particularly, the CEC communication unit 52 constructs a header block such as "05" by using a logical address { 0 } of its own device serving as the transmission source and a logical address {5} of the AV amplifier 12 serving as the transmission destination, and generates and transmits, for example, the Polling Message of the CEC control protocol such as 05 <polling>.

In response to this, in step S54, the CEC communication unit 95 determines whether or not the polling signal is received from the television receiver 11 serving as the HDMI sink. In a case where the polling signal is received from the television receiver 11 in step S54, the process proceeds to step S55.

In step S55, the CEC communication unit 95 returns an ACK in response to the polling signal.

In step S84, the CEC communication unit 52 determines whether or not the ACK is received from the AV amplifier 12. In a case where it is determined that the ACK is received in step S84, the process proceeds to step S85.

In step S85, since the ACK is received, the CEC communication unit 52 recognizes that the AV amplifier 12 is connected via the HDMI cable, and its own device is connected to a network functioning as the HDMI sink.

On the other hand, in a case where no ACK is received from the AV amplifier 12 in step S84, the process proceeds to step S86.

In step S86, since no ACK is received, the CEC communication unit 52 recognizes that the AV amplifier 12 is not connected via the HDMI cable, and its own device is not connected to a network functioning as the HDMI sink.

Further, in the AV amplifier 12, in a case where it is determined in step S54 that the polling signal is not received, the process proceeds to step S56, and the polling signal is transmitted to the television receiver 11 each time the time counter T passes one minute.

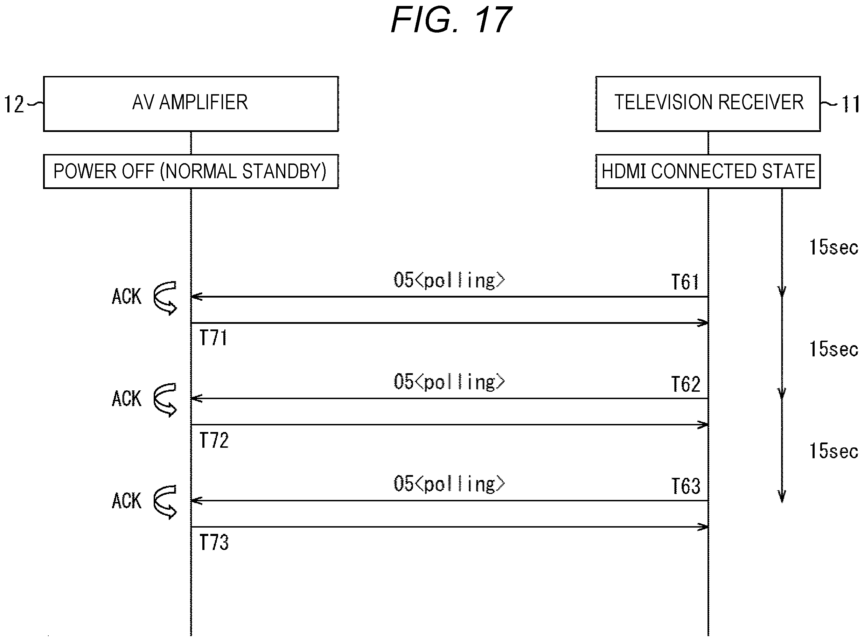

By the way, the AV amplifier 12 transmits the polling signal to the television receiver 11 at intervals of one minute, whereas the television receiver 11 transmits the polling signal to the AV amplifier 12 at intervals of 15 seconds as illustrated in Fig. 17.

In other words, in Fig. 17, the television receiver 11 transmits the polling signal at timings of times T61, T62, and T63 at intervals of 15 seconds. On the other hand, the AV amplifier 12 transmits the ACK corresponding to the received polling signal at timings of times T71, T72, and T73, then resets the time counter T, and resumes the counting.

As a result, as long as the television receiver 11 and the AV amplifier 12 are connected via the HDMI cable, and the polling from the television receiver 11 is repeatedly transmitted, the AV amplifier 12 need not to transmit the polling signal, and thus an unnecessary polling operation from the AV amplifier is unnecessary in the normal standby power OFF state, and the load of the CEC BUS can be suppressed.

Note that, in the above example, the interval at which the polling signal of the television receiver 11 is transmitted is 15 seconds, and the interval at which the polling signal of the AV amplifier 12 is transmitted is 1 minute, but other transmission intervals may be used as long as the transmission interval of the polling signal of the AV amplifier 12 is shorter than the transmission interval of the polling signal of the television receiver 11.

### <<3. Second embodiment>>

In the above example, if the AV amplifier 12 transitions to the state 141 which is the power saving standby power OFF state, even when the HDMI cable is connected to the television receiver 11 serving as the HDMI sink, it is necessary to perform a manipulation through the power button of the main body or the remote controller and perform transition to the state 143 which is the power ON state. However, the television receiver 11 may continuously transmit a predetermined CEC message at predetermined time intervals, and when the HDMI cable is connected, and the certain CEC message is received, the AV amplifier 12 may be caused to transition to the state 142 which is the normal standby power OFF state.

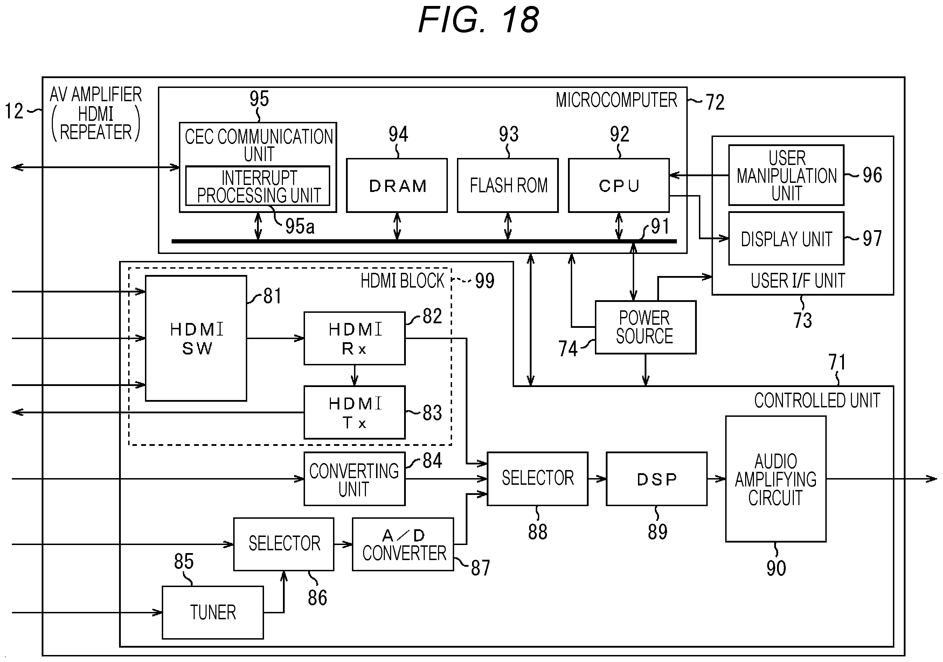

Fig. 18 illustrates a configuration example of the AV amplifier 12 configured to transition from the state 141 which is the power saving standby power OFF state to the state 142 which is the normal standby power OFF state as the television receiver 11 continuously transmits a predetermined CEC message at predetermined time intervals, the HDMI cable is connected, and the certain CEC message is received. Here, in Fig. 18, the same reference numerals and the same names are given to components having the same functions as those of the AV amplifier 12 of Fig. 4, and description thereof will be appropriately omitted.

In other words, the AV amplifier 12 in Fig. 18 is different from the AV amplifier 12 in Fig. 4 in that an interrupt processing unit 95a is provided in the CEC communication unit 95. If a predetermined CEC message is received from the television receiver 11 via the HDMI cable when it is in the state 141 which is the power saving standby power OFF state, an interrupt processing unit 95a gives an instruction to return from the state 141 which is the power saving standby power OFF state to the state 142 which is the normal power OFF state to the CPU 92 in response to the message. The CPU 92 starts an operation in accordance with the return instruction and supplies electric power to other necessary portions. Note that the CEC communication unit 95 may receive a manipulation signal of the power button or a manipulation signal of the remote controller in addition to the predetermined CEC message transmitted via the HDMI cable, activate the CPU 92 in response to the signal, and perform transition to the normal standby power OFF state.

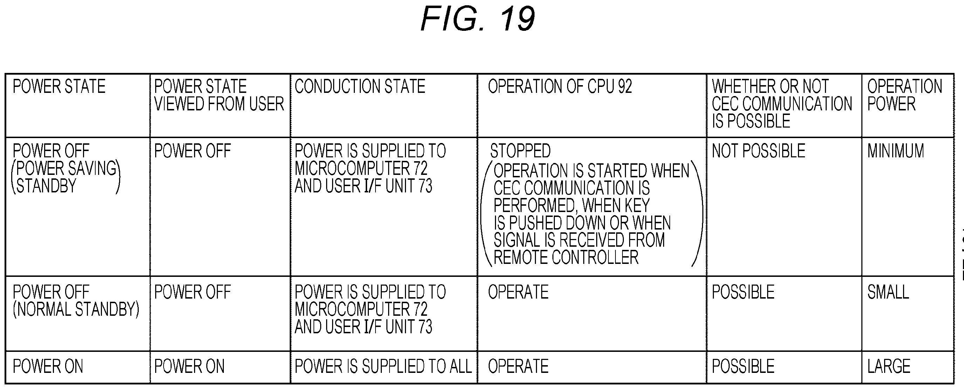

In other words, in this case, the respective operation states, that is, the state 141 of the power ON state, the state 142 of the normal standby power OFF state, and the state 143 of the power saving standby power OFF state have, for example, a relation illustrated in Fig. 19. Note that, in Fig. 19, the same description as that for Fig. 11 is omitted.

In Fig. 19, a difference from Fig. 11 lies in the operation state of the CPU 92 in the power saving standby power OFF state. In other words, in Fig. 19, the operation of the CPU 92 is in the stopped state in principle, but even in this case, only the interrupt processing unit 95a is supplied with electric power and operating, and causes the CEC communication to resume when a certain CEC message is received as well as when the manipulation signal of the power button by the user or the manipulation signal of the remote controller is received.

Here, since the television receiver 11 has only to transmit an existing CEC message in order to return the operation state from the power saving standby power OFF state, the television receiver 11 may have a similar configuration to that of the television receiver 11 of Fig. 3, and description thereof is omitted.

### <Return process in second embodiment>

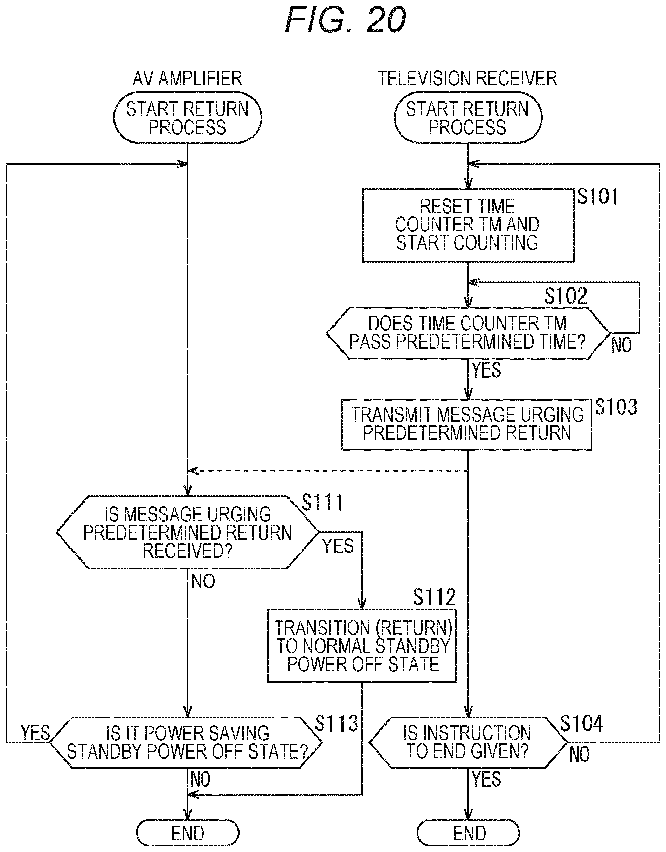

Next, a process for returning from the power saving standby power OFF state to the normal standby power OFF state in the configuration example of the second embodiment will be described with reference to the flowchart of Fig. 20. Here, since this process is a process for returning from the power saving standby power OFF state to the normal standby power OFF state, it is based on the premise that it is already in the power saving standby power OFF state when the process is started.

In other words, in step S101, the CEC communication unit 52 of the television receiver 11 resets the count of time counter TM and starts the counting.

In step S102, the CEC communication unit 52 determines whether or not the time counter TM passed a predetermined period of time, and repeats the same processing until a predetermined period of time elapses. Further, in a case where it is determined in step S102 that the time counter TM passes the predetermined period of time, the process proceeds to step S103.

In step S103, the CEC communication unit 52 transmits a predetermined CEC message to the AV amplifier 12.

In step S104, the CEC communication unit 52 determines whether or not an instruction to end the process is given, and in a case where the instruction to end is not given, the process returns to step S101, and the subsequent process is repeated. Then, in a case where the instruction to end is given in step S104, the process ends.

Further, in step S111, the interrupt processing unit 95a of the CEC communication unit 95 of the AV amplifier 12 determines whether or not a predetermined CEC message is received from the television receiver 11. In a case where a predetermined CEC message is received from the television receiver 11 in step S111, the process proceeds to step S112.

In step S112, if the predetermined CEC message is received, the interrupt processing unit 95a of the CEC communication unit 95 instructs the CPU 92 to perform transition from the power saving standby power OFF state to the normal standby power OFF state, causes it to be returned to the normal standby power OFF state, and ends the process.

Further, in a case where the CEC message is not received in step S111, the process proceeds to step S113.

In step S113, the interrupt processing unit 95a of the CEC communication unit 95 determines whether or not it is the power saving standby power OFF state, and in a case where it is the power saving standby power OFF state, the process returns to step S111, and the subsequent process is repeated.

Then, in a case where it is determined in step S113 that it is not the power saving power OFF state, that is, for example, in a case where the user manipulation unit 96 is manipulated, and the power source is manipulated to be turned on, the power state becomes the power ON state, and thus the return process ends.

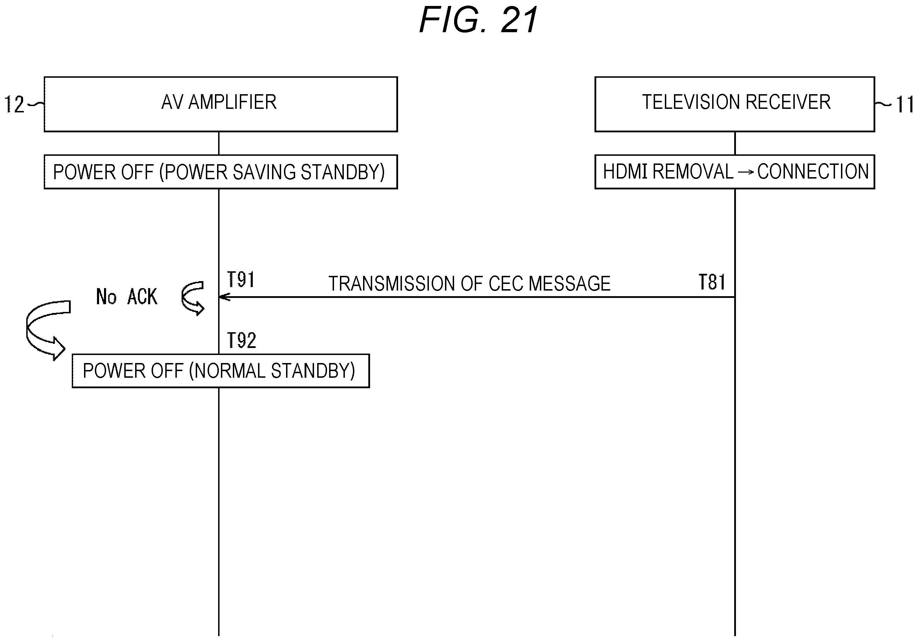

In other words, with the above process, if it is a state in which a predetermined CEC message for performing transition from the power saving standby power OFF state to the normal standby power OFF state is transmitted from the television receiver 11 at predetermined time intervals at a time T81, and the television receiver 11 and the AV amplifier 12 are connected via the HDMI cable in this state as illustrated in Fig. 21, the power state of the AV amplifier 12 transitions from the power saving standby power OFF state to the normal standby power OFF state at a time T91.

As a result, if the connection with the television receiver 11 serving as the HDMI sink via the HDMI cable is disconnected, the AV amplifier 12 transitions to the power saving standby power OFF state, and thus it is possible to reduce the power consumption further than in the normal standby power OFF state, and it is possible to transition to the normal standby power OFF state by merely inserting the HDMI cable. Further, it is possible to perform transition to the normal standby power OFF state by simply establishing the connecting with the television receiver 11 serving as the HDMI sink via the HDMI cable again, it is possible to easily use the AV amplifier 12, and it is possible to achieve convenience and power saving.

### <<4. Application example>>

### <Example of execution by software>

Meanwhile, a series of processes described above can be executed by hardware but can be executed by software as well. In a case where a series of processes is executed by software, a program constituting the software is installed in a computer incorporated into dedicatedhardware, for example, a general-purpose personal computer which can execute various kinds of functions through various kinds of programs installed therein, or the like from a recording medium.

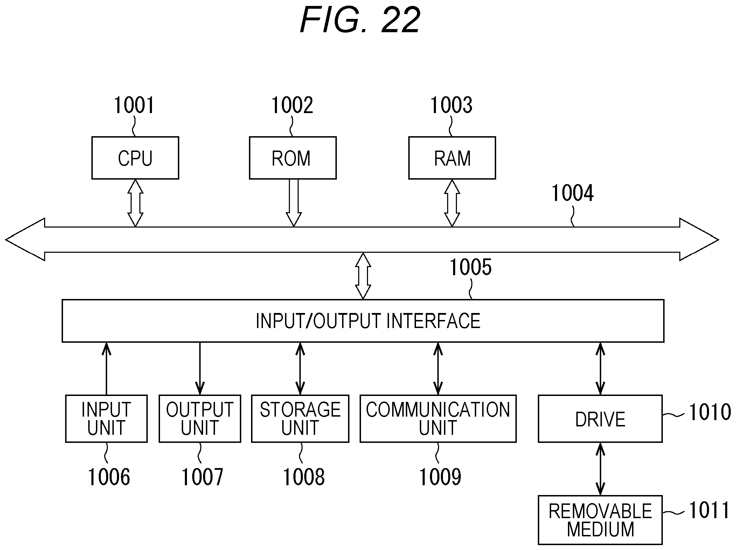

Fig. 22 illustrates a configuration example of a general-purpose personal computer. The personal computer includes a CPU 1001 therein. An input/output interface 1005 is connected to the CPU 1001 via a bus 1004. A ROM 1002 and a random access memory (RAM) 1003 are connected to the bus 1004.

An input unit 1006 including an input device such as a keyboard or a mouse through which the user inputs a manipulation command, an output unit 1007 that outputs a processing manipulation screen or a processing result image to a display device, a storage unit 1008 including a hard disk drive storing programs and various kinds of data, and a communication unit 1009 that includes a local area network (LAN) adapter or the like and executes a communication process via a network represented by the Internet are connected to the input/output interface 1005. Further, a drive 1010 that performs reading and writing of data on a removable medium 1011 such as a magnetic disk (including a flexible disk), an optical disk (including a compact disc-read only memory (CD-ROM) and a digital versatile disc (DVD)), amagneto-optical disk (including a Mini Disc (MD)), or a semiconductor memory is connected.

The CPU 1001 executes various kinds of processes in accordance with a program stored in the ROM 1002 or a program which is read from the removable medium 1011 such as a magnetic disk, an optical disk, a magneto-optical disk, or a semiconductor memory, installed in the storage unit 1008, and loaded onto the RAM 1003 from the storage unit 1008. Further, data and the like necessary when the CPU 1001 executes various kinds of processes are appropriately stored in the RAM 1003.

In the computer having the configuration described above, the CPU 1001 loads, for example, the program stored in the storage unit 1008 onto the RAM 1003 via the input/output interface 1005 and the bus 1004, and executes the program, so that a series of processes described above is performed.

The program executed by computer (CPU 1001) can be provided in a form in which it is recorded in the removable medium 1011 serving as, for example, a package media. Further, the program can be provided via a wired or wireless transmission medium such as a local area network, the Internet, or digital satellite broadcasting.

In the computer, the program can be installed in the storage unit 1008 via the input/output interface 1005 as the removable medium 1011 is loaded into the drive 1010. Further, the program can be received through the communication unit 1009 via a wired or wireless transmission medium and installed in the storage unit 1008. In addition, the program can be installed in the ROM 1002 or the storage unit 1008 in advance.

Note that the program executed by the computer may be a program in which processes are performed chronologically in accordance with the order described in this specification or a program in which processes are performed in parallel or at necessary timings such as when calling is performed.

Further, in this specification, a system means a group of multiple components (apparatuses, modules (parts), or the like), and it does not matter whether or not all components are accommodated in the same housing. Therefore, both a plurality of apparatuses which are accommodated in separate housings and connected via a network and one apparatus including a plurality of modules which are accommodated in one housing are systems.

Note that the embodiments of the present disclosure are not limited to the above-described embodiments, and various modifications can be made without departing from the gist of the present disclosure.

For example, the present disclosure can take a configuration of cloud computing in which a single function is shared and cooperatively processed by a plurality of apparatuses via a network.

Further, each step described in the above- described flowchart can be executed by a single apparatus or can be shared and executed by a plurality of apparatuses.

Further, in a case where a plurality of processes is included in one step, the plurality of processes included in one step can be executed by one apparatus or can be shared and executed by a plurality of apparatuses.

### REFERENCE SIGNS LIST

- 11: Television receiver
- 12: AV amplifier
- 52: CEC communication unit
- 72: Microcomputer
- 95: CEC communication unit

## Claims

1. An information processing apparatus (12) that is connected with another apparatus via an interface including a signal channel in which transmission and reception of a predetermined signal are performed and a control channel in which a control signal used for control is transmitted bi-directionally, wherein the interface is a high definition multimedia interface (HDMI), the information processing apparatus comprising:
a main control unit (92) configured to control an overall operation in the information processing apparatus;
a signal management unit (95) configured to transmit a first control signal to the other apparatus, determine a connection state of the interface on the basis of a second control signal received from the other apparatus in response to the first control signal, and control an operation of the main control unit in accordance with a determination result for the connection state, wherein the control signal, the first control signal, and the second control signal are consumer electronics control (CEC) messages; and
a transmission/reception control unit (71) for controlling transmission and reception of the predetermined signal,
wherein, when power supply to the transmission/reception control unit (71) is stopped, the signal management unit (95) transmits the first control signal to the other apparatuses at a first time interval, and determines an insertion/extraction state of an HDMI cable as the connection state of the interface on the basis of the second control signal received from the other apparatus in response to the first control signal.

2. The information processing apparatus (12) according to claim 1, wherein control of the overall operation in the information processing apparatus (12) by the main control unit (92) includes control of a power supply state to the main control unit (92) and an operation clock.

3. The information processing apparatus (12) according to claim 1 or claim 2, wherein the signal management unit (95) transmits a polling signal to the other apparatus as the first control signal at the first time interval, and determines the insertion/extraction state of the HDMI cable in accordance with presence or absence of a response signal which is the second control signal transmitted in response to the polling signal.

4. The information processing apparatus (12) according to claim 1 or claim 2, wherein, when a polling signal which is a third control signal transmitted from the other apparatus at a second time interval shorter than the first time interval is received, the signal management unit (95) transmits a response signal which is a corresponding fourth control signal to the other apparatus, and resets a time interval at which the polling signal which is the first control signal is transmitted.

5. The information processing apparatus (12) according to claim 1 or claim 2, wherein, in a case where the second control signal transmitted from the other apparatus in response to the first control signal is not received, the signal management unit (95) determines that the HDMI cable which is in the connection state of the interface is removed, stops an operation of the transmission/reception control unit, and stops the operation of the main control unit (92).

6. The information processing apparatus (12) according to claim 5, further comprising
a manipulation input unit (96) configured to receive a manipulation input from a user and generate a manipulation signal corresponding to manipulation content,
wherein, in a case where the operation of the transmission/reception control unit (71) is stopped, and the operation of the main control unit (92) is stopped, when the manipulation signal is generated by the manipulation input unit, the signal management unit (95) resumes the operation of the transmission/reception control unit (71) and resumes the operation of the main control unit (92).

7. The information processing apparatus (12) according to claim 5, wherein, in a case where the operation of the transmission/reception control unit (71) is stopped, and the operation of the main control unit (92) is stopped, when a predetermined control signal is received from the other apparatus, the signal management unit resumes the operation of the transmission/reception control unit (71), and resumes the operation of the main control unit (92).

8. The information processing apparatus (12) according to any of claims 1 to 7, wherein the signal management unit (95) transmits the first control signal including a logical address of the information processing apparatus which is a transmission source and a logical address of the other apparatus which is a transmission destination.

9. An information processing method of an information processing apparatus (12) that is connected with another apparatus via an interface including a signal channel in which transmission and reception of a predetermined signal are performed and a control channel in which a control signal used for control is transmitted bi-directionally, wherein the interface is a high definition multimedia interface (HDMI), the information processing method comprising:
transmitting a first control signal to the other apparatus, determining a connection state of the interface on the basis of a second control signal received from the other apparatus in response to the first control signal, wherein the control signal, the first control signal, and the second control signal are consumer electronics control (CEC) messages; and
controlling an operation of a main control unit (92) in accordance with a determination result for the connection state, the main control unit (92) being configured to control an overall operation in the information processing apparatus (12)
wherein, when power supply to a transmission/reception control unit (71) for controlling transmission and reception of the predetermined signal is stopped, the first control signal is transmitted to the other apparatuses at a first time interval and an insertion/extraction state of an HDMI cable as the connection state of the interface is determined on the basis of the second control signal received from the other apparatus in response to the first control signal.

## Patentansprüche

1. Datenverarbeitungsvorrichtung (12), die mit einer anderen Vorrichtung über eine Schnittstelle verbunden ist, die einen Signalkanal, in dem das Senden und Empfangen eines vorbestimmten Signals durchgeführt werden, und einen Steuerkanal, in dem ein zur Steuerung verwendetes Steuersignal bidirektional übertragen wird, aufweist, wobei die Schnittstelle eine hochauflösende Multimedia-Schnittstelle (HDMI) ist, wobei die Datenverarbeitungsvorrichtung Folgendes umfasst:
eine Hauptsteuereinheit (92), die dazu ausgelegt ist, einen Gesamtbetrieb in der Datenverarbeitungsvorrichtung zu steuern;
eine Signalverwaltungseinheit (95), die dazu ausgelegt ist, ein erstes Steuersignal an die andere Vorrichtung zu senden, einen Verbindungsstatus der Schnittstelle auf der Basis eines zweiten Steuersignals, das von der anderen Vorrichtung als Antwort auf das erste Steuersignal empfangen wird, zu bestimmen und einen Betrieb der Hauptsteuereinheit gemäß einem Bestimmungsergebnis für den Verbindungsstatus zu steuern, wobei das Steuersignal, das erste Steuersignal und das zweite Steuersignal Unterhaltungselektronik-Steuernachrichten (CEC-Nachrichten) sind; und
eine Sende-/Empfangssteuereinheit (71) zum Steuern des Sendens und Empfangens des vorbestimmten Signals,
wobei die Signalverwaltungseinheit (95) dann, wenn eine Leistungsversorgung für die Sende-/Empfangssteuereinheit (71) gestoppt wird, das erste Steuersignal an die anderen Vorrichtungen in einem ersten Zeitintervall sendet und einen eingesteckten/herausgezogenen Zustand eines HDMI-Kabels als den Verbindungszustand der Schnittstelle auf der Basis des zweiten Steuersignals, das von der anderen Vorrichtung als Antwort auf das erste Steuersignal empfangen wird, bestimmt.

2. Datenverarbeitungsvorrichtung (12) nach Anspruch 1, wobei die Steuerung des Gesamtbetriebs in der Datenverarbeitungsvorrichtung (12) durch die Hauptsteuereinheit (92) eine Steuerung eines Leistungsversorgungszustands für die Hauptsteuereinheit (92) und einen Betriebstakt umfasst.

3. Datenverarbeitungsvorrichtung (12) nach Anspruch 1 oder 2, wobei die Signalverwaltungseinheit (95) in dem ersten Zeitintervall ein Abfragesignal als erstes Steuersignal an die andere Vorrichtung sendet und den eingesteckten/herausgezogenen Zustand des HDMI-Kabels gemäß dem Vorhandensein oder Fehlen eines Antwortsignals, das das zweite Steuersignal ist, das als Antwort auf das Abfragesignal übertragen wird, bestimmt.

4. Datenverarbeitungsvorrichtung (12) nach Anspruch 1 oder Anspruch 2, wobei dann, wenn ein Abfragesignal, das ein drittes Steuersignal ist, das von der anderen Vorrichtung in einem zweiten Zeitintervall gesendet wird, das kürzer als das erste Zeitintervall ist, empfangen wird, die Signalverwaltungseinheit (95) ein Antwortsignal, das ein entsprechendes viertes Steuersignal ist, an die andere Vorrichtung sendet und ein Zeitintervall, in dem das Abfragesignal gesendet wird, das das erste Steuersignal ist, zurücksetzt.

5. Datenverarbeitungsvorrichtung (12) nach Anspruch 1 oder Anspruch 2, wobei in einem Fall, in dem das zweite Steuersignal, das von der anderen Vorrichtung als Antwort auf das erste Steuersignal gesendet wird, nicht empfangen wird, die Signalverwaltungseinheit (95) bestimmt, dass das HDMI-Kabel, das in dem Verbindungszustand der Schnittstelle ist, entfernt ist, einen Betrieb der Sende-/Empfangssteuereinheit stoppt und den Betrieb der Hauptsteuereinheit (92) stoppt.

6. Datenverarbeitungsvorrichtung (12) nach Anspruch 5, die ferner umfasst:
eine Bedienungseingabeeinheit (96), die dazu ausgelegt ist, eine Bedienungseingabe von einem Anwender zu empfangen und ein Bedienungssignal, das Bedienungsinhalt entspricht, zu erzeugen,
wobei in einem Fall, in dem der Betrieb der Sende-/Empfangssteuereinheit (71) gestoppt ist und der Betrieb der Hauptsteuereinheit (92) gestoppt ist, dann, wenn das Bedienungssignal von der Bedienungseingabeeinheit erzeugt wird, die Signalverwaltungseinheit (95) den Betrieb der Sende-/Empfangssteuereinheit (71) wiederaufnimmt und den Betrieb der Hauptsteuereinheit (92) wiederaufnimmt.

7. Datenverarbeitungsvorrichtung (12) nach Anspruch 5, wobei in einem Fall, in dem der Betrieb der Sende-/Empfangssteuereinheit (71) gestoppt ist und der Betrieb der Hauptsteuereinheit (92) gestoppt ist, dann, wenn ein vorbestimmtes Steuersignal von der anderen Vorrichtung empfangen wird, die Signalverwaltungseinheit den Betrieb der Sende-/Empfangssteuereinheit (71) wiederaufnimmt und den Betrieb der Hauptsteuereinheit (92) wiederaufnimmt.

8. Datenverarbeitungsvorrichtung (12) nach einem der Ansprüche 1 bis 7, wobei die Signalverwaltungseinheit (95) das erste Steuersignal sendet, das eine logische Adresse der Datenverarbeitungsvorrichtung, die eine Übertragungsquelle ist, und eine logische Adresse der anderen Vorrichtung, die ein Übertragungsziel ist, enthält.

9. Datenverarbeitungsverfahren einer Datenverarbeitungsvorrichtung (12), die mit einer anderen Vorrichtung über eine Schnittstelle verbunden ist, die einen Signalkanal, in dem das Senden und Empfangen eines vorbestimmten Signals durchgeführt wird, und einen Steuerkanal, in dem ein zur Steuerung verwendetes Steuersignal bidirektional übertragen wird, aufweist, wobei die Schnittstelle eine hochauflösende Multimedia-Schnittstelle (HDMI) ist, wobei das Datenverarbeitungsverfahren umfasst:
Senden eines ersten Steuersignals an die andere Vorrichtung, Bestimmen eines Verbindungszustands der Schnittstelle auf der Basis eines von der anderen Vorrichtung als Antwort auf das erste Steuersignal empfangenen zweiten Steuersignals, wobei das Steuersignal, das erste Steuersignal und das zweite Steuersignal Unterhaltungselektronik-Steuernachrichten (CEC-Nachrichten) sind; und
Steuern eines Betriebs einer Hauptsteuereinheit (92) gemäß einem Bestimmungsergebnis für den Verbindungszustand, wobei die Hauptsteuereinheit (92) dazu ausgelegt ist, einen Gesamtbetrieb in der Datenverarbeitungsvorrichtung (12) zu steuern,
wobei dann, wenn eine Leistungsversorgung für eine Sende-/Empfangssteuereinheit (71) zum Steuern des Sendens und Empfangens des vorbestimmten Signals gestoppt ist, das erste Steuersignal in einem ersten Zeitintervall an die anderen Vorrichtungen gesendet wird und ein eingesteckter/herausgezogener Zustand eines HDMI-Kabels als der Verbindungsstatus der Schnittstelle auf der Basis des zweiten Steuersignals, das von der anderen Vorrichtung als Antwort auf das erste Steuersignal empfangen wird, bestimmt wird.

## Revendications

1. Appareil de traitement d'informations (12) qui est connecté à un autre appareil par le biais d'une interface comportant un canal de signal dans lequel s'effectuent la transmission et la réception d'un signal prédéterminé et un canal de commande dans lequel un signal de commande utilisé pour la commande est transmis de manière bidirectionnelle, l'interface consistant en une interface multimédia haute définition (HDMI), l'appareil de traitement d'informations comprenant :
une unité de commande principale (92) configurée pour commander le fonctionnement global de l'appareil de traitement d'informations ;
une unité de gestion de signal (95) configurée pour transmettre un premier signal de commande à l'autre appareil, déterminer un état de connexion de l'interface sur la base d'un deuxième signal de commande reçu depuis l'autre appareil en réponse au premier signal de commande et commander le fonctionnement de l'unité de commande principale conformément à un résultat de détermination pour l'état de connexion, le signal de commande, le premier signal de commande et le deuxième signal de commande consistant en des messages de type commande d'électronique grand public (CEC) ; et
une unité de commande de transmission/réception (71) destinée à commander la transmission et la réception du signal prédéterminé,
lors d'une interruption de l'alimentation électrique de l'unité de commande de transmission/réception (71), l'unité de gestion de signal (95) transmettant le premier signal de commande aux autres appareils à un premier intervalle de temps et déterminant un état d'insertion/d'extraction d'un câble HDMI comme l'état de connexion de l'interface sur la base du deuxième signal de commande reçu depuis l'autre appareil en réponse au premier signal de commande.

2. Appareil de traitement d'informations (12) selon la revendication 1, dans lequel la commande du fonctionnement global de l'appareil de traitement d'informations (12) par l'unité de commande principale (92) comporte la commande d'un état d'alimentation électrique de l'unité de commande principale (92) et d'une horloge de fonctionnement.

3. Appareil de traitement d'informations (12) selon la revendication 1 ou la revendication 2, dans lequel l'unité de gestion de signal (95) transmet un signal d'interrogation à l'autre appareil comme le premier signal de commande au premier intervalle de temps et détermine l'état d'insertion/d'extraction du câble HDMI conformément à la présence ou à l'absence d'un signal de réponse constituant le deuxième signal de commande transmis en réponse au signal d'interrogation.

4. Appareil de traitement d'informations (12) selon la revendication 1 ou la revendication 2, dans lequel, lors de la réception d'un signal d'interrogation constituant un troisième signal de commande transmis depuis l'autre appareil à un deuxième intervalle de temps plus court que le premier intervalle de temps, l'unité de gestion de signal (95) transmet à l'autre appareil un signal de réponse constituant un quatrième signal de commande correspondant et réinitialise un intervalle de temps auquel le signal d'interrogation constituant le premier signal de commande est transmis.

5. Appareil de traitement d'informations (12) selon la revendication 1 ou la revendication 2, dans lequel, en cas de non-réception du deuxième signal de commande transmis depuis l'autre appareil en réponse au premier signal de commande, l'unité de gestion de signal (95) détermine que le câble HDMI qui se trouve dans l'état de connexion de l'interface est retiré, interrompt le fonctionnement de l'unité de commande de transmission/réception et interrompt le fonctionnement de l'unité de commande principale (92).

6. Appareil de traitement d'informations (12) selon la revendication 5, comprenant en outre une unité d'entrée de manipulation (96) configurée pour recevoir une entrée de manipulation depuis un utilisateur et générer un signal de manipulation correspondant à un contenu de manipulation,
dans lequel, en cas d'interruption du fonctionnement de l'unité de commande de transmission/réception (71) et d'interruption du fonctionnement de l'unité de commande principale (92), lors de la génération du signal de manipulation par l'unité d'entrée de manipulation, l'unité de gestion de signal (95) remet en fonctionnement l'unité de commande de transmission/réception (71) et remet en fonctionnement l'unité de commande principale (92) .

7. Appareil de traitement d'informations (12) selon la revendication 5, dans lequel, en cas d'interruption du fonctionnement de l'unité de commande de transmission/réception (71) et d'interruption du fonctionnement de l'unité de commande principale (92), lors de la réception d'un signal de commande prédéterminé depuis l'autre appareil, l'unité de gestion de signal remet en fonctionnement l'unité de commande de transmission/réception (71) et remet en fonctionnement l'unité de commande principale (92).

8. Appareil de traitement d'informations (12) selon l'une quelconque des revendications 1 à 7, dans lequel l'unité de gestion de signal (95) transmet le premier signal de commande comportant une adresse logique de l'appareil de traitement d'informations constituant une source de transmission et une adresse logique de l'autre appareil constituant une destination de transmission.

9. Procédé de traitement d'informations d'un appareil de traitement d'informations (12) qui est connecté à un autre appareil par le biais d'une interface comportant un canal de signal dans lequel s'effectuent la transmission et la réception d'un signal prédéterminé et un canal de commande dans lequel un signal de commande utilisé pour la commande est transmis de manière bidirectionnelle, l'interface consistant en une interface multimédia haute définition (HDMI), le procédé de traitement d'informations comprenant :
la transmission d'un premier signal de commande à l'autre appareil, la détermination d'un état de connexion de l'interface sur la base d'un deuxième signal de commande reçu depuis l'autre appareil en réponse au premier signal de commande, le signal de commande, le premier signal de commande et le deuxième signal de commande consistant en des messages de type commande d'électronique grand public (CEC) ; et
la commande du fonctionnement d'une unité de commande principale (92) conformément à un résultat de détermination pour l'état de connexion, l'unité de commande principale (92) étant configurée pour commander le fonctionnement global de l'appareil de traitement d'informations (12),
lors d'une interruption de l'alimentation électrique d'une unité de commande de transmission/réception (71) destinée à commander la transmission et la réception du signal prédéterminé, le premier signal de commande étant transmis aux autres appareils à un premier intervalle de temps et un état d'insertion/d'extraction d'un câble HDMI étant déterminé comme l'état de connexion de l'interface sur la base du deuxième signal de commande reçu depuis l'autre appareil en réponse au premier signal de commande.
